# EUROPÄISCHE PATENTSCHRIFT

(11) **EP 4 186 832 B1**
(45) Veröffentlichungstag und Bekanntmachung des Hinweises auf die Patenterteilung: **25.03.2026**
(21) Anmeldenummer: 22209633.1
(22) Anmeldetag: 25.11.2022
(51) Int. Cl.: B65G 47/86

(54) **STEUERNOCKEN FÜR EINE KLAMMERVORRICHTUNG UND KLAMMERVORRICHTUNG ZUM HALTEN EINES BEHÄLTERS**
CONTROL CAM FOR A CLAMPING DEVICE AND CLAMPING DEVICE FOR HOLDING A CONTAINER
CAME DE COMMANDE POUR UNE PINCE ET PINCE POUR RETENIR UN RÉCIPIENT

(30) Priorität: 25.11.2021 DE 102021131002
(43) Veröffentlichungstag der Anmeldung: 31.05.2023
(73) Patentinhaber: KRONES AG, 93073 Neutraubling (DE)
(72) Erfinder: Spandl, Stefan, 93073 Neutraubling (DE); Landler, Bruno, 93073 Neutraubling (DE)
(74) Vertreter: Nordmeyer, Philipp Werner

(56) Entgegenhaltungen:
- EP-A1- 1 930 259
- DE-A1- 102018 121 092
- DE-B3- 102016 123 640

## Beschreibung

### Technisches Gebiet

Die vorliegende Erfindung betrifft einen Steuernocken zum Steuern der Position von zueinander schwenkbaren Klammerarmen einer Klammervorrichtung, sowie eine Klammervorrichtung zum Halten eines Behälters in einer Behälterbehandlungsvorrichtung, beispielsweise zum Halten eines Getränkebehälters in einem Halsabschnitt, um diesen innerhalb einer Getränkeabfüllanlage zu befüllen oder zu verschließen.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt ist.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelement, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Aus der EP 0 939 044 A1 ist ein Flaschengreifer bekannt, bei welchem eine Greifvorrichtung vorgesehen ist, welche zwei Greifarme aufweist, die mittels eines Steuernockens in eine Halteposition oder eine Löseposition bringbar sind. Der Steuernocken wirkt mit einer an jedem Greifarm ausgebildeten Anlagefläche zusammen und die Anlagefläche ist als Bestandteil eines elastischen Kissens ausgebildet, welches an dem jeweiligen Greifarm angeordnet ist.

Aus der EP 2 143 674 A2 ist eine aktive Klammervorrichtung zum Halten von Behältern bekannt, bei welchen zwei Greifarme beziehungsweise Klammerarme mit separaten Magnetanordnungen in einer geöffneten Position gehalten werden. Die Klammerarme weisen nach hinten orientierte Schließhebel auf, welche mit einem dazwischen angeordneten Schließnocken zusammenwirken, um die Klammerarme aus der geöffneten Position in eine geschlossene Position zu bringen.

Die DE 10 2005 014 838 A1 zeigt eine aktive Klammervorrichtung zum Halten von Gefäßen mit zwei Klammerarmen, die zum Öffnen und Schließen relativ zueinander beweglich sind. Um ein sicheres Halten der Gefäße zu ermöglichen, ist ein Greifarm der Klammer formstabil und der andere Greifarm formelastisch ausgebildet. Die Greifarme werden mittels daran angeordneter Magneten in eine geöffnete Position vorgespannt und mittels eines Steuernockens in die geschlossene Position geschwenkt.

Den herkömmlichen, einseitig vorgespannten Klammervorrichtungen ist gemein, dass der Steuernocken zu jedem Klammerarm genau eine Kontaktfläche aufweist, mittels welcher er den Klammerarm berührt. Bei einem Schwenken des Steuernockens gleitet der Steuernocken mit seiner Kontaktfläche über die Kontaktfläche, und zwar sowohl bei einem Öffnen als auch einem Schließen der Klammerarme via des Schwenkens des Steuernockens mit dieser genau einen Kontaktfläche. Der Steuernocken übt auf die Klammerarme hierbei eine Kraft auf die Klammerarme auf, die der Vorspannung durch die Vorspanneinrichtung entgegengerichtet ist. Die durch den Steuernocken auf die Klammerarme aufgebrachte Kraft weist hierbei stets in die gleiche Richtung. Beispielsweise bei einer in die geschlossene Stellung vorgespannten aktiven Klammervorrichtung muss der Steuernocken zum Öffnen der Klammerarme auf diese die der Vorspannung entgegengesetzte Kraft aufbringen. Zumeist ist der Steuernocken hierzu derart ausgebildet, dass seine Kontaktfläche in Bezug auf die Schwenkachse des Steuernockens in Umfangsrichtung einen zunehmenden Radius bzw. Abstand aufweist, mithin eine Nockenform aufweist, wie etwa aus der DE 10 2005 014 838 A1 zu entnehmen. Mit seiner Kontaktfläche zum Klammerarm gleitet der Steuernocken an diesem Klammerarm entlang. Aufgrund des sich vergrößernden Radius bzw. Abstands an der Kontaktstelle zum Klammerarm wird der Klammerarm aus seiner vorgespannten Lage gedrückt und mithin um seine Schwenkachse geschwenkt. Zum Schließen der Klammerarme wird der Steuernocken wiederrum geschwenkt, so dass er mit seiner Kontaktfläche über den Klammerarm zurück gleitet. Durch den sich verringernden Abstand des Bereichs der Kontaktfläche, mit dem der Steuernocken mit dem Klammerarm in Kontakt steht, wird der Klammerarm durch die Vorspannkraft wieder zurückgedrückt.

Bei Klammervorrichtungen mit einseitiger Vorspannung der Klammerarme in eine Position, die durch Betätigung des Steuernockens entgegen der Vorspannung in eine andere Position bewegt werden können, und durch Lösen beziehungsweise erneutes Schalten des Steuernockens von selbst in die eine vorgespannte Position zurückbewegt werden, ist der Vorgang des vorspannungsbedingten Rückbewegens mit einer gewissen Trägheit behaftet. Demgemäß kann es zu ruckartigem Greifen des Behälters und ruckartigem Lösen des Haltens des Behälters kommen. Ferner kann es bei derartigen aktiven Klammervorrichtungen zu einem hohen Verschleiß zwischen Klammerarmen und Steuernocken, insbesondere an dessen Kontaktfläche, kommen, da letzterer stets gegen die einseitig gerichtete Vorspannung arbeiten muss.

Die DE 10 2016 123 640 B3 beschreibt einen Greifer mit Klammerarmen für den Behältertransport, umfassend eine Steuereinrichtung mit bogenförmigen Steuerkurven, wobei die Klammerarme mittels einer Drehbewegung der Steuereinrichtung zwischen einer Öffnungsposition und einer Erfassungsposition verschwenkbar sind. Die DE 10 2018 121 092 A1 beschreibt eine weitere Vorrichtung zum Greifen von Behältern mit einer drehbar gelagerten Steuereinheit. DE 10 2018 121 092 A1 offenbart einen Steuernocken zum Steuern der Position von zueinander schwenkbaren Klammerarmen einer Klammervorrichtung, umfassend einen Wellenabschnitt zum schwenkbaren Lagern des Steuernockens um eine Steuernockenschwenkachse in einem Nabenabschnitt einer Trägerplatte der Klammervorrichtung, wobei der Steuernocken zwischen einer Offenvorgabeposition und einer Schließvorgabeposition um die Steuernockenschwenkachse schwenkbar ist, wobei zumindest eine sich in Richtung der Steuernockenschwenkachse erstreckende, zum Übertragen einer ersten schaltenden Kraft auf einen der Klammerarme ausgebildete und eingerichtete erste Koppelfläche und eine von der ersten Koppelfläche verschiedene, sich in Richtung der Steuernockenschwenkachse erstreckende, zum Übertragen einer der ersten schaltenden Kraft entgegengerichteten zweiten schaltenden Kraft auf den Klammerarm ausgebildete und eingerichtete zweite Koppelfläche.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters in einem Halsabschnitt bereitzustellen.

Die Aufgabe wird durch einen Steuernocken zum Steuern der Position von zueinander schwenkbaren Klammerarmen mit jeweils einem Halteabschnitt in einer Klammervorrichtung mit den Merkmalen des Anspruchs 1 gelöst. Vorteilhafte Weiterbildungen ergeben sich aus den Unteransprüchen, der Beschreibung und den Figuren.

Entsprechend wird ein Steuernocken zum Steuern der Position von zueinander schwenkbaren Klammerarmen einer Klammervorrichtung vorgeschlagen, umfassend einen Wellenabschnitt zum schwenkbaren Lagern des Steuernockens um eine Steuernockenschwenkachse in einem Nabenabschnitt einer Trägerplatte der Klammervorrichtung, und zumindest ein Koppelelement zum Koppeln des Steuernockens mit einem Klammerarm der Klammervorrichtung, wobei der Steuernocken zwischen einer Offenvorgabeposition und einer Schließvorgabeposition um die Steuernockenschwenkachse schwenkbar ist.

Erfindungsgemäß ist der Steuernocken dadurch gekennzeichnet, dass das zumindest eine Koppelelement eine sich in Richtung der Steuernockenschwenkachse erstreckende, zum Übertragen einer ersten schaltenden Kraft auf den Klammerarm ausgebildete und eingerichtete erste Koppelfläche und eine von der ersten Koppelfläche verschiedene, sich in Richtung der Steuernockenschwenkachse erstreckende, zum Übertragen einer der ersten schaltenden Kraft entgegengerichteten zweiten schaltenden Kraft auf den Klammerarm ausgebildete und eingerichtete zweite Koppelfläche umfasst.

Dadurch, dass das zumindest eine Koppelelement eine sich in Richtung der Steuernockenschwenkachse erstreckende, zum Übertragen einer ersten schaltenden Kraft auf den Klammerarm ausgebildete und eingerichtete erste Koppelfläche und eine von der ersten Koppelfläche verschiedene, sich in Richtung der Steuernockenschwenkachse erstreckende, zum Übertragen einer der ersten schaltenden Kraft entgegengerichteten zweiten schaltenden Kraft auf den Klammerarm ausgebildete und eingerichtete zweite Koppelfläche umfasst, kann via des Koppelelements eine permanente Zwangsführung der Klammerarme sowohl beim Öffnen als auch beim Schließen und vorzugsweise ebenso eine Vorspannung der Klammerarme in zumindest eine vorgegebenen Position, bevorzugt in eine Öffnungsposition oder eine Schließposition der Klammerarme bzw. von Halteabschnitten der Klammerarme, bereitgestellt werden.

Anders ausgedrückt ist aufgrund der via des Koppelelementes bereitgestellten Koppelung die Position und eine Bewegung der Klammerarme von der Position und einer Bewegung des Steuernockens stets vorgegeben. Entsprechend wird sowohl das Öffnen der Klammerarme zum Aufnehmen des jeweils zu behandelnden Behälters, das Schließen der Klammerarme zum Halten des Behälters und das nachfolgende Öffnen zum Ausgeben des vorher gehaltenen Behälters jeweils aktiv und von dem Steuernocken geführt angesteuert.

Entsprechend kann verhindert werden, dass die Klammerarme und der Steuernocken bei einem Schaltimpuls auf den Steuernocken, welcher eine abrupte Bewegung des Steuernockens erzeugt, kurzzeitig außer Eingriff gelangen beziehungsweise den Kontakt zueinander verlieren, wie es bei einseitig vorgespannten konventionellen Klammervorrichtungen mit herkömmlichen Steuernocken der Fall sein kann, etwa bei ungenügender Federkraft der einseitigen Vorspannung, um dann wieder aneinander zu stoßen. Das Greifen und Loslassen des durch die Klammervorrichtung zu haltenden Behälters kann mithin vergleichsweise sanft erfolgen, ohne, dass unkontrollierte Stöße beim Öffnen oder Schließen der Klammerarme auftreten.

Ferner kann durch die permanent vorhandene Führung, bereitgestellt durch das Koppelelement und einem korrespondierend am Klammerarm ausgebildete Koppelelement des Klammerarmes, eine definierte Anlage der Halteabschnitte an den zu haltenden Behälter erzielt werden.

Eine einen derartig ausgebildeten Steuernocken aufweisende Klammervorrichtung kann folglich in Vergleich zu herkömmlichen Vorrichtungen während des Betriebs einen besonders niedrigen Verschleiß unterliegen, insbesondere in Bereichen, in welchen die Klammerarme und der Steuernocken gekoppelt sind, was sich wiederum positiv auf die Lebensdauer des Steuernockens sowie der Komponenten der Klammervorrichtung auswirkt.

Hinsichtlich einer eine den Steuernocken umfassenden Klammervorrichtung aufweisenden Behälterbehandlungsvorrichtung können im Vergleich zu Behälterbehandlungsvorrichtungen mit herkömmlichen Klammervorrichtungen die Wartungsintervalle aufgrund des verringerten Verschleißes vergrößert sein.

Ferner kann durch das stets zwangsgeführte Bewegen der Halteabschnitte und des Reduzierens im Vergleich zu herkömmlichen Klammervorrichtungen beziehungsweise gar des Vermeidens des Auftretens von Stößen während des Öffnens und/oder Schließens der Klammerarme, gesteuert durch den Steuernocken, ein Beschädigen des zu haltenden Behälters und/oder ein Austreten von im Behälter befindlichen Füllguts, etwa einem Getränk, und von damit einhergehenden Kontaminationen der Klammervorrichtung und anderen Bereichen einer die Klammervorrichtung Behälterbehandlungsvorrichtung und der Außenseite des Behälters reduziert oder gar vermieden werden.

Der Ausdruck "Schwenkachse" wird als geometrische Achse verstanden, welche einen Rotationsmittelpunkt darstellt, und beschreibt hierin insbesondere eine feste Schwenkachse, mithin eine hinsichtlich der Klammervorrichtung ortsfest angeordnete Achse. Eine sich verschiebende Achse im Sinne eines Momentanpols wird mithin nicht als "Schwenkachse" verstanden. Ein sich in einer Ebene zugleich rotatorisch und translatorisch bewegender Körper führt kein Schwenken um eine feste Achse auf, er weist demgemäß keine Schwenkachse wie sie hier verstanden wird auf.

Die geometrische Schwenkachse kann selbstredend in Form einer mechanischen Achse beziehungsweise Welle in an sich bekannter Weise bereitgestellt beziehungsweise ausgebildet sein. Beispielsweise kann ein Achszapfen, ein Stift oder ein Bolzen an einer Trägerplatte der Klammervorrichtung angeordnet sein, an welchem beispielsweise ein Klammerarm im Sinne eine Welle-Nabe-Verbindung schwenkbar gelagert ist. Vorliegend umfasst etwa der Steuernocken den Wellenabschnitt, welcher in einer Bohrung in der Trägerplatte drehbar gelagert ist und dadurch die geometrische Achse bereitstellt.

Unter "entgegengerichtet" ist hier zu verstehen, dass die erste schaltende Kraft und die zweite schaltende Kraft bezogen auf die Steuernockenschwenkachse jeweils eine Umfangskomponente aufweisen, wobei die Umfangskomponente der ersten schaltenden Kraft und die Umfangskomponente der zweiten schaltenden Kraft entgegengesetzt, mithin gegensinnig, orientiert sind.

Die zueinander schwenkbaren Klammerarme der Klammervorrichtung weisen bevorzugt jeweils einem Halteabschnitt auf, wobei die Halteabschnitte je nach Betriebszustand der Klammervorrichtung zur Aufnahme, zum Halten und zum Ausgeben des jeweils zu behandelnden Behälters zusammenwirken.

Gemäß einer weiteren bevorzugten Ausführungsform sind die Koppelflächen des zumindest einen Koppelelements in Bezug auf das Koppelelement, insbesondere auf dessen Kontur bzw.

Querschnittkontur senkrecht zur Steuernockenschwenkachse, gegenüberliegend am Koppelelement angeordnet.Gemäß einer weiteren bevorzugten Ausführungsform ist das zumindest eine Koppelelement in Form einer Langlochnut, bevorzugt zum Aufnehmen eines an einem Klammerarm angeordneten Steuerbolzens, oder in Form eines Steuerbolzens, bevorzugt zum Eindringen in eine an einem Klammerarm angeordnete Langlochnut, ausgebildet. Dann kann auf besonders vorteilhafte Weise eine dauerhafte, sprich permanente, Zwangsführung zumindest eines Klammerarmes der Klammervorrichtung durch den Steuernocken bereitgestellt werden.

Als "Langlochnut" wird hier eine Nut verstanden, die im Wesentlichen die Form eines Langlochs aufweist, mithin sich in einer Längserstreckung von einem ersten Ende zu einem zweiten Ende erstreckt und zwischen den beiden Enden im Wesentlichen parallel zueinander verlaufende, anders ausgedrückt quer zur Längserstreckung mit einem festen Abstand zueinander verlaufende Seitenwände umfasst, welche vorzugsweise gerade verlaufen, mithin einen unendlichen Krümmungsradius aufweisen.

Die Längserstreckung der Langlochnut ist hierbei bezogen auf eine senkrecht zur Steuernockenschwenkachse orientierte Ebene. Mit anderen Worten ist die Langloch-Form der Langlochnut betrachtet in Richtung der Steuernockenschwenkachse zu erkennen.

Die Langlochnut erstreckt sich im Sinne einer Nut als Vertiefung in einen Körper mit der zuvor beschriebenen Langloch-Form, und zwar in Richtung der Steuernockenschwenkachse mit einer vorgegebenen Tiefe und/oder zumindest teilweise durch den gesamten Körper.

Umfasst der Steuernocken zumindest einen Steuerbolzen, so erstreckt sich gemäß einer weiteren bevorzugten Ausführungsform der zumindest eine Steuerbolzen in Richtung der Steuernockenschwenkachse mit einer vorgegebenen Höhe von einer Stirnseite des Wellenabschnitts.

Umfasst der Steuernocken zumindest eine Langlochnut, so erstreckt sich gemäß einer weiteren bevorzugten Ausführungsform die zumindest eine Langlochnut in Richtung der Steuernockenschwenkachse mit einer vorgegebenen Tiefe von einer Stirnseite des Wellenabschnitts in den Steuernocken hinein.

Um ein besonders präzises und synchrones Steuern der Halteabschnitte der Klammerarme der Klammervorrichtung erzielen zu können, sind gemäß einer weiteren bevorzugten Ausführungsform zwei Koppelelemente vorgesehen, wobei jeweils ein Koppelelement zum Koppeln des Steuernockens mit jeweils einem der beiden Klammerarme der Klammervorrichtung ausgebildet ist, wobei bevorzugt ein erstes Koppelelement, bevorzugt ein erster Steuerbolzen oder eine erste Langlochnut, einen ersten Abstand zur Steuernockenschwenkachse aufweist und ein zweites Koppelelement, bevorzugt ein zweiter Steuerbolzen oder eine zweite Langlochnut, einen zweiten Abstand zur Steuernockenschwenkachse aufweist, wobei der Betrag des zweiten Abstands bevorzugt größer ist als jener des erstes Abstands.

Gemäß einer weiteren bevorzugten Ausführungsform ist das zumindest eine Koppelelement, bevorzugt der zumindest eine Steuerbolzen oder die zumindest eine Langlochnut, exzentrisch zur Steuernockenschwenkachse angeordnet. So ist durch das Koppelelement bezogen auf die Steuernockenschwenkachse stets ein Hebelarm bereitgestellt, der bei einem Schwenken des Steuernockens stets auf zumindest einen Klammerarm über dessen Kopplung mit dem korrespondierenden Koppelelement am Klammerarm eine Kraft ausübt, um so die Bewegung des Klammerarmes und/oder eine durch den Halteabschnitt des Klammerarmes auf einen in der Klammervorrichtung gehaltenen Behälter ausgeübte Haltekraft zu steuern.

Gemäß einer weiteren bevorzugten Ausführungsform umfasst der zumindest eine Steuerbolzen einen bezogen auf eine bevorzugt parallel zur Steuernockenschwenkachse orientierte Längsmittelachse des Steuerbolzens gekrümmten Abschnitt, bevorzugt einen kreisbogenförmigen Abschnitt

Alternativ oder zusätzlich kann der zumindest ein Steuerbolzen einen sich in einer senkrecht zur Steuernockenschwenkachse orientierten Ebene erstreckenden Nockenabschnitt aufweisen.

Vorzugsweise ist zumindest eine Koppelfläche im gekrümmten Abschnitt und/oder im Nockenabschnitt angeordnet.

Wenn gemäß einer bevorzugten Ausführungsform zwei Steuerbolzen vorgesehen sind, können die Steuerbolzen durch eine Verbindungswand verbunden sein, welche vorzugsweise als zwei miteinander verbundene Nockenabschnitte verstanden werden können, wobei jeweils ein Nockenabschnitt einem Steuerbolzen zugeordnet ist.

Gemäß einer weiteren bevorzugten Ausführungsform umfasst der Steuernocken eine radiale Sicherungsnut zum Aufnehmen eines Fixierungselements, bevorzugt einer Passfeder oder eines Sicherungsbleches, um den Steuernocken bezogen auf die Steuernockenschwenkachse axial zu fixieren.

Alternativ oder zusätzlich kann der zumindest eine Steuerbolzen in Richtung der Steuernockenschwenkachse gesehen an seinem stirnseitigen freiem Ende gegenüber einer Stirnseite des Wellenabschnitts einen Sicherungssteg zum axialen Sichern des Steuernockens an der Klammervorrichtung aufweisen.

Vorzugsweise ist der Sicherungssteg in Form eines konzentrisch oder exzentrisch zur Längsmittelachse des Steuerbolzens angeordneten, bevorzugt kreisförmigen, Flansches, ausgebildet, dessen Außendurchmesser bevorzugt größer ist als ein Radius eines kreisbogenförmigen Abschnitts des Steuerbolzens und/oder bevorzugt größer ausgebildet ist als eine Breite der am Klammerarm der Klammervorrichtung vorgesehenen Langlochnut quer zu deren Längserstreckung.

Gemäß einer weiteren bevorzugten Ausführungsform weist der Steuernocken einen sich in Bezug auf die Steuernockenschwenkachse nach radial außen erstreckenden Interaktionsteil zum Interagieren mit einem Interaktionsbolzen einer Behälterbehandlungsvorrichtung auf, wobei der Interaktionsteil zum Begrenzen eines Bewegungsumfang des Steuernockens um die Steuernockenschwenkachse ausgebildet ist, wobei der Interaktionsteil bevorzugt ausgebildet ist, mit einem Anschlag der Klammervorrichtung wechselzuwirken, wobei der Steuernocken bevorzugt zwei sich in Bezug auf die Steuernockenschwenkachse nach radial nach außen erstreckende Arme aufweist.

Gemäß der Erfindung umfasst der Steuernocken ein Vorspannelement, das zumindest ein Federelement umfasst, und das ausgebildet ist, mit einem Anschlagelement der Klammervorrichtung zu interagieren, so dass der Steuernocken in die Offenvorgabeposition vorgespannt ist, wenn sich der Steuernocken in der Offenvorgabeposition befindet, und in die Schließvorgabeposition vorgespannt ist, wenn sich der Steuernocken in der Schließvorgabeposition befindet.

Es hat sich als vorteilhaft herausgestellt, das Vorspannelement gemäß einer weiteren bevorzugten Ausführungsform als elastisches Vorspannelement und/oder als magnetisches Vorspannelement (nicht Gegenstand der Erfindung) auszubilden.

Gemäß einer weiteren bevorzugten Ausführungsform umfasst das Vorspannelement ein elastisches Federelement, wobei das Federelement bevorzugt in Bezug auf die Steuernockenschwenkachse eine Krümmung aufweist, die größer ist als eine Krümmung eines konzentrisch zur Steuernockenschwenkachse vorliegenden geometrischen Teilkreises auf Höhe des Federelements.

Gemäß einer weiteren bevorzugten Ausführungsform umfasst das Vorspannelement einen sich zu einem konzentrisch zur Steuernockenschwenkachse vorliegenden geometrischen Teilkreis nach radial außen erstreckenden Steg und ein sich vom dem Steg bezogen auf die Steuernockenschwenkachse quer zur radialen Richtung erstreckendes Federelement. Vorzugsweise erstreckt sich in Hinblick auf die Umfangsrichtung bezogen auf die Steuernockenschwenkachse beidseitig des Stegs jeweils ein Federelement. Das zumindest eine Federelement ist bevorzugt derart ausgebildet, dass zwischen einem freien Ende des Federelements und einem dem Ende des Federelements gegenüberliegenden Arm ein Abstand vorliegt, so dass eine Aufnahme zum formschlüssigen Aufnehmen einer Laufrolle der Klammervorrichtung in Umfangsrichtung bezogen auf die Steuernockenschwenkachse bereitgestellt ist.

Gemäß der Erfindung ist das zumindest eine Federelement als gekrümmte Blattfeder, in Form eines bezogen auf die Steuernockenschwenkachse radial federnd gelagerten Bolzens, oder in Form eines Biegebalkens mit freiem Ende, ausgebildet.

Gemäß einer Ausführ, die nicht Gegenstand der Erfindung ist, ist das Vorspannelement in Form eines magnetischen Vorspannelements ausgebildet, wobei das magnetische Vorspannelement bevorzugt zumindest ein an einem Arm vorgesehenes Magnetelement umfasst, wobei das magnetische Vorspannelement bevorzugt zwei Magnetelemente umfasst, die in jeweils einem Arm angeordnet sind, wobei das zumindest eine Magnetelement derart ausgebildet und angeordnet ist, in einem in der Klammervorrichtung eingebauten Zustand des Steuernockens mit einem Magneten der Klammervorrichtung so wechselzuwirken, dass zwischen dem Magneten und dem Magnetelement eine magnetische Anziehungskraft vorliegt, zumindest wenn der Steuernocken in der Schließvorgabeposition vorliegt und/oder wenn der der Steuernocken in der Offenvorgabeposition vorliegt.

Weitere vorteilhafte Ausführungsformen sowie weitere vorteilhafte Wirkungen des Steuernockens sind der nachfolgenden Beschreibung bevorzugter Ausführungsbeispiele zu entnehmen.

Die oben genannte Aufgabe wird ferner durch eine Klammervorrichtung zum Halten eines Behälters in einer Behälterbehandlungsvorrichtung, bevorzugt zum Halten eines Getränkebehälters in einem Halsabschnitt, mit den Merkmalen des Anspruchs 12 gelöst. Vorteilhafte Weiterbildungen ergeben sich aus der Beschreibung und den beigefügten Figuren.

Entsprechend wird eine Klammervorrichtung zum Halten eines Behälters in einer Behälterbehandlungsvorrichtung, bevorzugt zum Halten eines Getränkebehälters in einem Halsabschnitt, vorgeschlagen, welche zwei Klammerarme mit jeweils einem Halteabschnitt zum Halten des zu haltenden Behälters umfasst. Die Klammervorrichtung ist dadurch gekennzeichnet, dass die Klammerarme mit einem Steuernocken gemäß einer der vorstehenden Ausführungsformen gekoppelt sind.

Dadurch, dass die Klammervorrichtung einen Steuernocken gemäß einer der vorstehenden Ausführungsformen umfasst, treffen die hinsichtlich des Steuernockens oben und im Folgenden beschriebenen Vorteile und Wirkungen in analoger Weise für die Klammervorrichtung zu.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht eines Steuernockens zum Steuern der Position von zueinander schwenkbaren Klammerarmen mit jeweils einem Halteabschnitt in einer Klammervorrichtung;
- Figur 2: schematisch eine perspektivische Seitenansicht eines Steuernockens gemäß einer weiteren Ausführungsform;
- Figur 3: schematisch eine perspektivische Seitenansicht eines Steuernockens gemäß einer weiteren Ausführungsform;
- Figur 4: schematisch eine perspektivische Seitenansicht eines Steuernockens gemäß einer weiteren Ausführungsform;
- Figur 5: schematisch eine Draufsicht auf den Steuernocken aus Figur 4;
- Figur 6: schematisch eine perspektivische Seitenansicht eines Steuernockens gemäß einer weiteren Ausführungsform;
- Figur 7: schematisch eine perspektivische Seitenansicht eines Steuernockens gemäß einer weiteren Ausführungsform;
- Figur 9: schematisch eine weitere Ausführungsform eines Steuernockens;
- Figur 10: schematisch eine perspektivische Seitenansicht einer Klammervorrichtung zum Halten eines Getränkebehälters in einem Halsabschnitt;
- Figur 11: schematisch eine Draufsicht einer Klammervorrichtung gemäß einer weiteren Ausführungsform in einer geschlossenen Stellung;
- Figur 12: schematisch eine Draufsicht der Klammervorrichtung aus Figur 11 in einer geöffneten Stellung;
- Figur 13: schematisch eine Draufsicht einer Klammervorrichtung gemäß einer weiteren Ausführungsform einer geschlossenen Stellung;
- Figur 14: schematisch eine Draufsicht der Klammervorrichtung aus Figur 13 in einer geöffneten Stellung;
- Figur 15: schematisch eine perspektivische Seitenansicht einer Klammervorrichtung gemäß einer weiteren Ausführungsform;
- Figur 16: schematisch eine Ansicht von unten der Klammervorrichtung aus Figur 10;
- Figur 17: schematisch eine perspektivische Seitenansicht von unten eines Teilbereiches der Klammervorrichtung aus Figur 10;
- Figur 18: schematisch eine Ansicht von unten einer Klammervorrichtung gemäß einer weiteren Ausführungsform;
- Figur 19: schematisch eine Ansicht von unten einer Klammervorrichtung gemäß einer weiteren Ausführungsform;
- Figur 20: schematisch eine perspektivische Seitenansicht einer Klammervorrichtung gemäß einer weiteren Ausführungsform;
- Figur 21: schematisch eine perspektivische Seitenansicht einer Klammervorrichtung gemäß einer weiteren Ausführungsform;
- Figur 22: schematisch eine Draufsicht einer Klammervorrichtung gemäß einer weiteren Ausführungsform;
- Figur 23: schematisch eine Draufsicht auf einen oberen Teil eines Steuernockens analog zur Ausführungsform gemäß Figur 22;
- Figur 24: schematisch eine Seitenansicht des Teils aus Figur 23;
- Figur 25: schematisch eine Klammervorrichtung gemäß einer weiteren Ausführungsform,
- Figuren 26 und 27: schematisch Draufsichten eines Details des Steuernockens aus Figur 1; und
- Figuren 28 und 29: schematisch Draufsichten eines Details des Steuernockens der Klammervorrichtung aus Figur 22.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

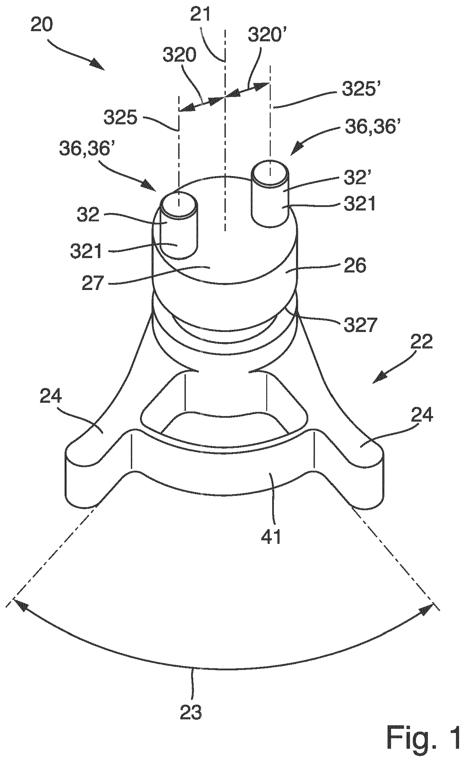

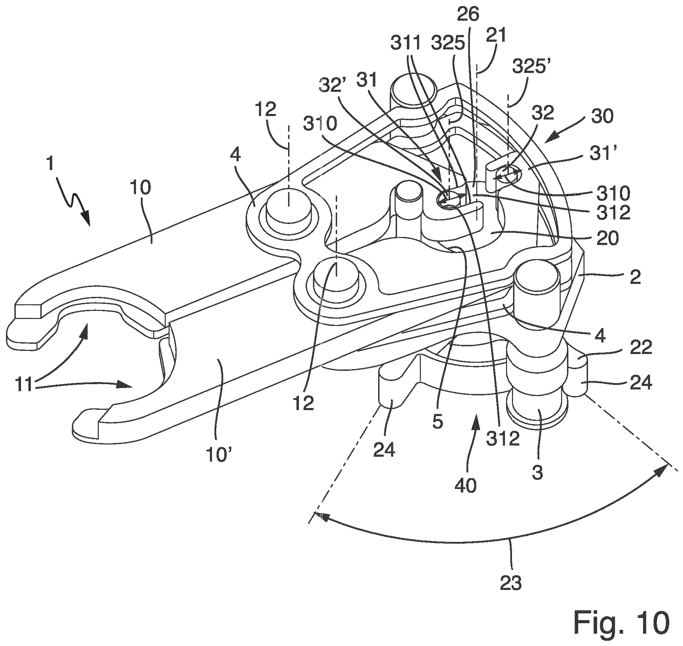

In Figur 1 ist schematisch eine perspektivische Seitenansicht eines Steuernockens 20 zum Steuern der Position von zueinander schwenkbaren Klammerarmen 10 mit jeweils einem Halteabschnitt 11 in einer Klammervorrichtung 1 (siehe auch Figur 10) gezeigt. Der Steuernocken 20 umfasst einen Wellenabschnitt 26 zum schwenkbaren Lagern des Steuernockens 20 um eine Steuernockenschwenkachse 21 in einem hier nicht gezeigten Nabenabschnitt 5 einer Trägerplatte 2 der Klammervorrichtung 1. Er umfasst ferner zwei Koppelelemente zum Koppeln des Steuernockens 20 mit den Klammerarmen 10 der Klammervorrichtung 1. Die Koppelelemente sind vorliegend jeweils in Form eines exzentrisch zur Steuernockenschwenkachse 21 angeordneten Steuerbolzens 32, 32' ausgebildet.

Die Steuerbolzen 32, 32' erstrecken sich von einer Stirnseite 27 des Wellenabschnitts 26 in Richtung der Steuernockenschwenkachse 21. Entsprechend weisen sie jeweils eine Längsmittelachse 325, 325' auf, die parallel zur Steuernockenschenkachse 21 orientiert ist.

Die Steuerbolzen 32, 32' sind jeweils ausgebildet und eingerichtet, mit einer am jeweiligen, durch den Steuerbolzen 32, 32' zu steuernden Klammerarm 10 angeordneten Langlochnut 31 (siehe Figur 10) zu interagieren bzw. mit dieser eine Kopplung einzugehen. Die Kopplung ist derart ausgebildet, dass der jeweilige Steuerbolzen 32, 32' in der ihm zugeordneten Langlochnut 31 geführt ist, vorzugsweise, indem er sich entlang der Langlochnut 31 bzw. entlang einer Längserstreckung 310 der Langlochnut 31, die sich senkrecht zur Steuernockenschwenkachse 21 erstreckt, translatorisch bewegen kann und bevorzugt zudem relativ zur Langlochnut 31 rotatorisch bewegen kann, bevorzugt via eines Abrollens auf und/oder eines Gleitens über eine Seitenwand 311 der Langlochnut 31.

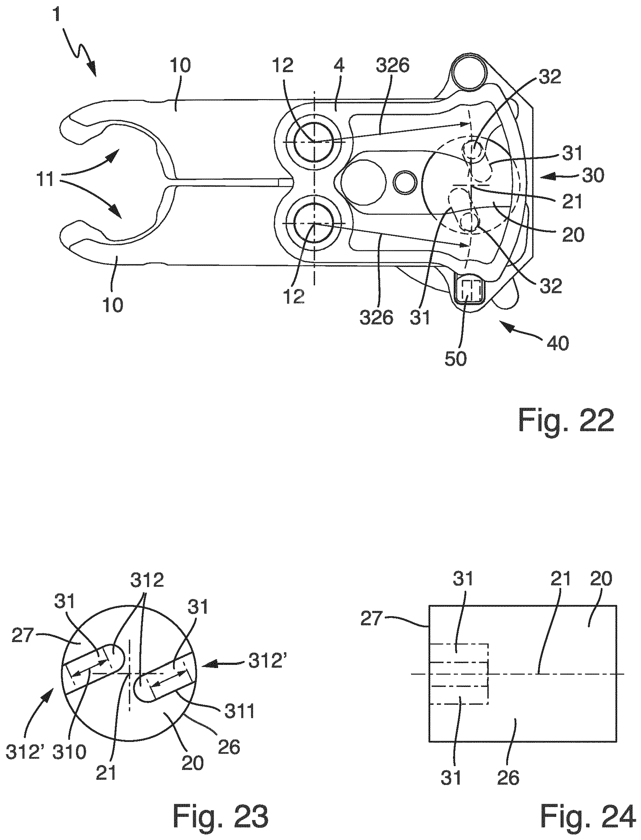

Alternativ kann der Steuerbolzen 20 auch Koppelelemente in Form einer Langlochnut 31 aufweisen, wie weiter unten in Hinblick auf die Figuren 22 bis 24 näher erläutert. Entsprechend erstreckt sich die Langlochnut 31 dann in Richtung der Steuernockenschwenkachse 21 mit einer vorgegebenen Tiefe von der Stirnseite 27 des Steuernockens 20 in den Steuernocken. Ferner ist die Langlochnut 31 dann ausgebildet, einen der Langlochnut 31 zugeordneten Steuerbolzen 32, der am zu steuernden Klammerarm 10 angeordnet ist, aufzunehmen und dadurch eine Führung des Steuerbolzens 32 entlang der Längserstreckung 310 der Langlochnut 31, bevorzugt translatorisch und rotatorisch, wie analog oben zum Steuerbolzen 32, 32' gemäß Figur 1 beschrieben, bereitzustellen.

In der Ausführungsform wie in Figur 1 gezeigt weist der erste Steuerbolzen 32 einen radialen Abstand 320 zur Steuernockenschwenkachse 21 auf, der um einen vorgegebenen Betrag kleiner ist als der radiale Abstand 320' des zweiten Steuernockens 32' zur Steuernockenschwenkachse 21. Die Abstände 320, 320' sind hierbei auf die Mittellängsachsen 325, 325' bezogen.

Dadurch, dass die Steuerbolzen 32, 32' mit unterschiedlichen radialen Abständen 320, 320' zur Steuernockenschwenkachse 21 angeordnet sind, kann ein symmetrisches Schwenken beider Klammerarme 10 der den Steuernocken 20 aufweisenden Klammervorrichtung 1 erzielt werden, auch wenn sich die Abstände zwischen Schwenkachse 12 des Klammerarmes 10 und Langlochnut 31, 31' hinsichtlich der beiden Klammerarme 10, 10' unterscheiden. Die vorstehenden Abstände 320, 320' sind dabei vorzugsweise so gewählt, dass das durch das erste Paar aus erster Langlochnut und erstem Steuerbolzen bereitgestellte Übersetzungsverhältnis im Wesentlichen dem durch das zweite Paar aus zweiter Langlochnut und zweitem Steuerbolzen bereitgestellten Übersetzungsverhältnis entspricht.

Die Mittellängsachsen 325, 325' sind die Mittelachse bezogen auf die zylindrische Seitenwand des jeweiligen Steuernockens 32, 32'. Die zylindrische Seitenwand, synonym die Mantelfläche, entspricht einem sich entlang des gesamten Umfangs erstreckenden kreisbogenförmigen Abschnitts 321 des Steuernockens 32, 32'.

Im an der Klammervorrichtung 1 angebrachten Zustand kann der Steuernocken 20 durch ein Schwenken um seine Steuernockenschwenkachse 21 zwischen einer Offenvorgabeposition und einer Schließvorgabeposition um die Steuernockenschwenkachse 21 geschwenkt werden.

Um den Steuernocken 20 axial zur Steuernockenschwenkachse 21 in der Klammervorrichtung in einer festen Position zu fixieren, umfasst der Steuernocken 20 optional eine radiale Sicherungsnut 327 zum Aufnehmen eines Fixierungselements, beispielsweise einer Passfeder oder eines Sicherungsbleches, das vorzugweise an der Trägerplatte 2 der Klammervorrichtung 1 angeordnet ist.

Um die Position des Steuernockens 20 in einem an einer Behältertransportvorrichtung einer Behälterbehandlungsvorrichtung eingebauten Zustand der Klammervorrichtung 1 verändern zu können, weist dieser einen sich in Bezug auf die Steuernockenschwenkachse 21 nach radial außen erstreckenden Interaktionsteil 22 auf, an welchen beispielsweise ein an einer festen Position der Behälterbehandlungsvorrichtung vorgesehener Interaktionsbolzen anschlagen und so ein Schwenken des Steuernockens 20 bewirken kann.

Um den Bewegungsumfang des Steuernockens 20 um die Steuernockenschwenkachse 21 zu begrenzen, kann der Interaktionsteil 22 ausgebildet sein, mit einem bevorzugt an der Trägerplatte 2 angeordneten optionalen Anschlag der Klammervorrichtung wechselzuwirken. Vorzugsweise umfasst der Steuernocken 20 zu diesem Zwecke zwei sich in Bezug auf die Steuernockenschwenkachse 21 in Umfangsrichtung gesehen nach radial nach außen erstreckende Arme 24, die vorzugsweise dazu eingerichtet sind, an dem zwischen den Armen 24 angeordneten Anschlag oder zwei jeweils radial außerhalb der Arme 24 angeordneten Anschlägen in einer Endposition anzuschlagen. So kann der Steuernocken 20 im in der Klammervorrichtung 1 eingebauten Zustand nur in einem durch die Arme 24, insbesondere durch die Interaktion mit dem zumindest einen Anschlag 3, begrenzten Winkel 23, welcher vorliegend 45° ist, um die Steuernockenschwenkachse 21 schwenken. Die Endpositionen des Steuernockens 20, bei welchen der Steuernocken 20 mit einem seiner Arme 24 am Anschlag 3 anliegt, stellen hierbei Vorgabepositionen hinsichtlich der Öffnungs- und Schließpositionen der Halteabschnitte der Klammerarme 10 der Klammervorrichtung 1 dar. Eine Endposition stellt entsprechend eine Offenvorgabeposition dar und die andere Endposition stellt eine Schließvorgabeposition dar.

Der Steuernocken 20 umfasst ferner ein Vorspannelement, vorliegend in Form eines elastischen Federelements 41, das ausgebildet ist, mit einem Anschlagelement der Klammervorrichtung 1 zu interagieren, so dass der Steuernocken 20 in die Offenvorgabeposition vorgespannt ist, wenn sich der Steuernocken 20 in der Offenvorgabeposition befindet, und in die Schließvorgabeposition vorgespannt ist, wenn sich der Steuernocken 20 in der Schließvorgabeposition befindet.

Der Steuernocken 20 ist vorzugsweise einteilig oder gar einstückig ausgebildet. Der Steuernocken 20 ist bevorzugt aus einem Metall, bevorzugt einer Stahllegierung, ausgebildet. Alternativ kann der Steuernocken auch aus einem bevorzugt POM ausgebildet sein, und/oder es können Teile des Steuernockens 20, bevorzugt die Steuerbolzen 32, die Langlochnuten 31 und/oder der Wellenabschnitt 26 mit einer Beschichtung, vorzugsweise einer Gleitbeschichtung und/oder Verschleißbeschichtung versehen sein. Vorzugsweise ist der Steuernocken 20 aus einem von der Trägerplatte 2 und/oder den Klammerarmen 10 unterschiedlichen Material ausgebildet, beispielsweise einem Metall mit unterschiedlicher Härte, oder einem Kunststoff.

Die Arme 24 und die Steuerbolzen 32, 32' sind derart ausgebildet, dass ein Hebelarmverhältnis zwischen einem sich zwischen Steuernockenschwenkachse 21 und einem vorgegebenen Angriffspunkt für ein Interaktionselement der Behälterbehandlungsvorrichtung zum Schalten des Steuernockens 20 vorliegenden Hebelarm und den zwischen Steuerbolzen 32, 32' und Steuernockenschwenkachse 21 vorliegenden Hebelarmen zwischen im Wesentlichen 5 zu 1 und 3 zu 1 liegt und bevorzugt im Wesentlichen 4 zu 1 ist. Unter "im Wesentlichen" ist hier zu verstehen, dass Unterschiede, welche sich aus den unterschiedlichen Abständen 320, 320' ergeben, innerhalb der Rundung beziehungsweise Toleranz des Hebelarmverhältnisses liegen. Mit anderen Worten ist der Unterschied der Abstände 320, 320' derart klein, dass die sich daraus ergebenen Unterschiede gegenüber den vorbeschriebenen Hebelarmen vernachlässigt werden können.

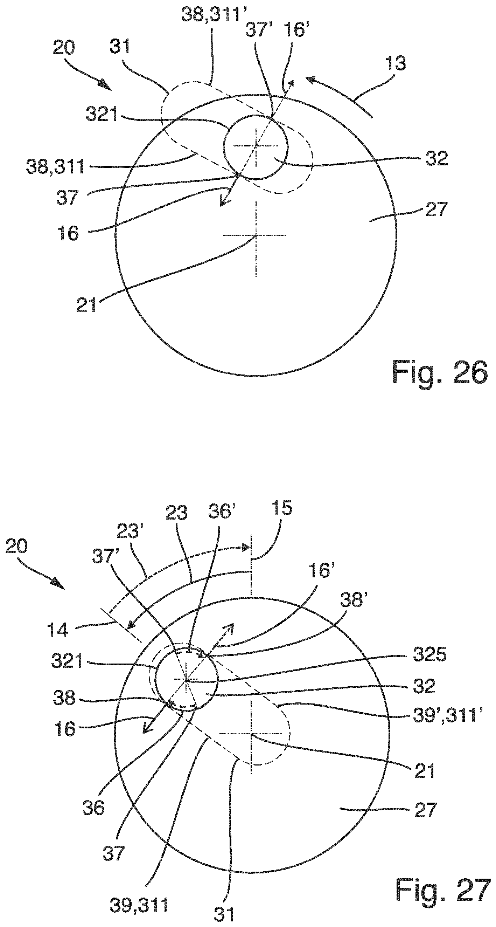

Wie in Hinblick auf die Figuren 26 und 27 weiter unten im Detail beschrieben, umfasst jedes der vorliegend in Form der Steuerbolzen 32, 32' ausgebildeten Koppelelemente des Steuernockens 20, um die über die Kopplung der Koppelelemente des Steuernockens 20 mit den Klammerarmen 10 bereitgestellte permanente Zwangsführung der Klammerarme 10 durch den Steuernocken 20 zu realisieren, jeweils eine sich in Richtung der Steuernockenschwenkachse 21 erstreckende, zum Übertragen einer ersten schaltenden Kraft auf den Klammerarm 10 ausgebildete und eingerichtete ersten Koppelfläche 36, und eine von der ersten Koppelfläche 36 verschiedene, sich in Richtung der Steuernockenschwenkachse 21 erstreckende, zum Übertragen einer der ersten schaltenden Kraft entgegengerichteten zweiten schaltenden Kraft auf den Klammerarm 10 ausgebildete und eingerichtete zweite Koppelfläche 36 (für Details siehe Figuren 26 und 27).

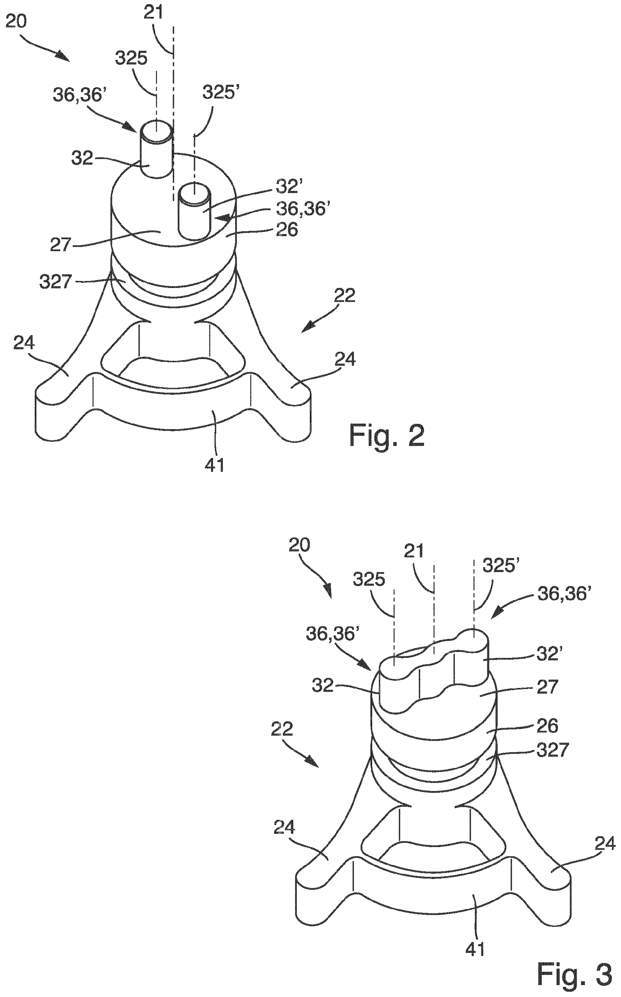

Figur 2 zeigt schematisch eine perspektivische Seitenansicht eines Steuernockens 20 gemäß einer weiteren Ausführungsform, welche im Wesentlichen jener aus Figur 1 entspricht. Lediglich die Steuerbolzen 32, 32' und der Interaktionsteil 22, mithin die Arme 24 weisen eine andere Orientierung zu einander auf.

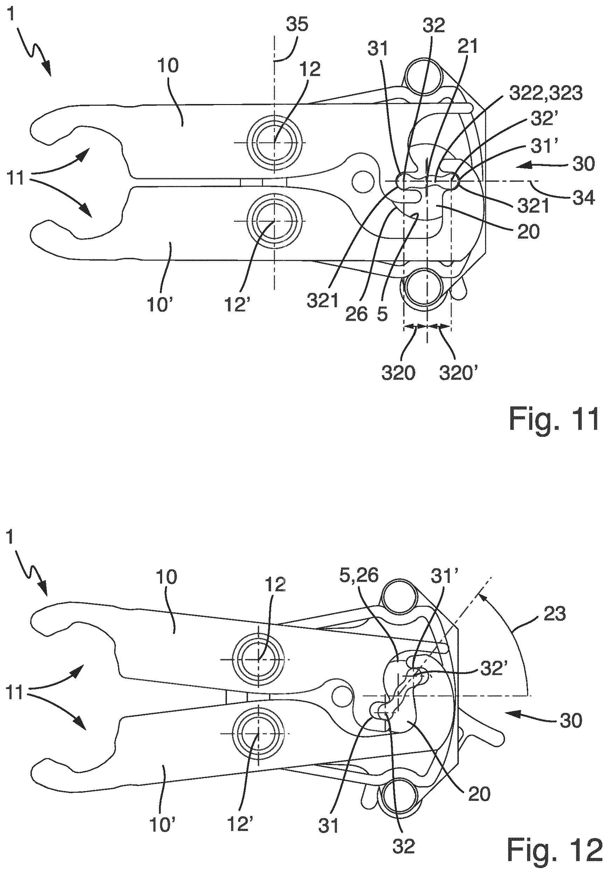

Die Orientierung der Koppelelemente, in den Figuren 1 und 2 die Steuerbolzen 32, 32', bezüglich des Interaktionsteils 22 bzw. der Arme 24, ist bevorzugt so vorgegeben, dass die Steuerbolzen 32, 32' in der Schließvorgabeposition senkrecht zu einer durch die Schwenkachsen der Klammerarme definierten Ebene orientiert sind (siehe auch Figur 11), oder parallel zu dieser Ebene orientiert sind (siehe auch Figur 12).

Aus Figur 3 ist schematisch eine perspektivische Seitenansicht eines Steuernockens 20 gemäß einer weiteren Ausführungsform gezeigt. Diese entspricht im Wesentlichen jener aus Figur 1. Im Unterschied zur Ausführung gemäß Figur 1 sind die Steuerbolzen 32, 32' in der Ausführung gemäß Figur 3 durch eine Verbindungswand 324 verbunden, welche als zwei miteinander verbundene Nockenabschnitte 322 verstanden werden kann. Hierdurch kann zusätzlich oder alternativ zum optimalen Anschlag 3 (siehe Figur 10) eine Begrenzung der Bewegung des Steuernockens 20 um die Steuernockenschwenkachse 21 bereitgestellt werden. Da die Steuerbolzen 32, 32' über die Verbindungswand 324 verbunden sind, weisen sie bezogen auf die Steuernockenschwenkachse 21 in radialer Richtung gegenüber der Ausführung in Figur 1 eine erhöhte Biegesteifigkeit auf.

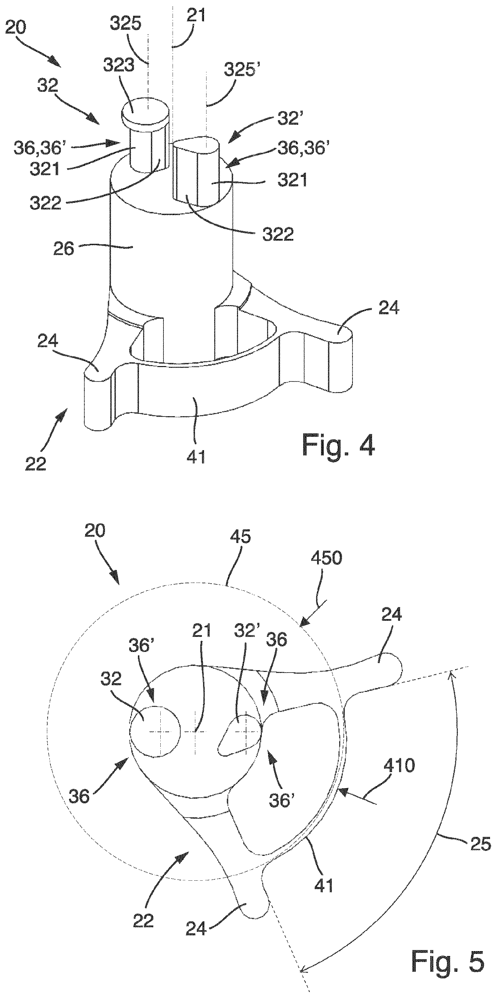

Figur 4 ist schematisch eine perspektivische Seitenansicht eines Steuernockens 20 gemäß einer weiteren Ausführungsform zu entnehmen, welche im Wesentlichen jener aus Figur 2 entspricht.

Bei der Klammervorrichtung 1 gemäß Figur 4 weisen im Unterschied zur Ausführung gemäß Figur 1 die Steuerbolzen 32, 32', jeweils einen Nockenabschnitt 322 auf. Hierdurch kann zusätzlich oder alternativ zum optimalen Anschlag 3 (siehe Figur 10) eine Begrenzung der Bewegung des Steuernockens 20 um die Steuernockenschwenkachse 21 bereitgestellt werden.

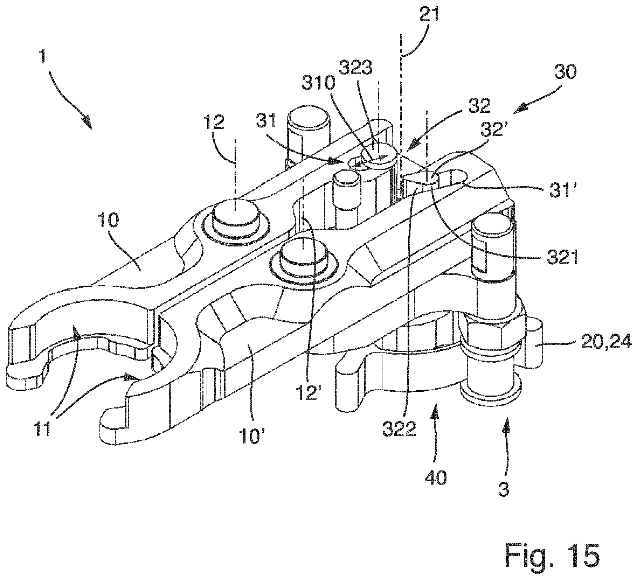

Ferner weist der Steuerbolzen 32 in Richtung der Steuernockenschwenkachse 21 gesehen an seinem stirnseitigen freiem Ende gegenüber der Stirnseite 27 einen Sicherungssteg 323 auf, vorliegend ausgebildet in Form eines konzentrisch zur Längsmittelachse 325 des Steuerbolzens 32 angeordneten kreisförmigen Flansches, dessen Außendurchmesser größer ist als der Radius des kreisbogenförmigen Abschnitts 321 und ferner größer als die Breite der Langlochnut 31 quer zu deren Längserstreckung 310 (siehe auch Figur 15). Dadurch ist in Richtung der Steuernockenschwenkachse 21 ein Formschluss zwischen dem Klammerarm 10 und dem Steuernocken 20 bereitgestellt, sodass der Steuernocken 20 in der in Figur 15 gezeigten, nicht an eine Behältertransportvorrichtung angebrachten Zustand an dem Klammerarm 10 gehalten ist.

Entsprechend ist bei dem Steuernocken 20 gemäß Figur 4 keine Sicherungsnut 327 (siehe Figuren 1-3) notwendig, weshalb hier auf diese verzichtet wurde.

Figur 5 zeigt schematisch eine Draufsicht auf den Steuernocken 20 aus Figur 4, anhand welcher das Vorspannelement näher beschrieben wird, wobei das Vorspannelement wie bereits hinsichtlich Figur 1 erwähnt, gemäß dieser bevorzugten Ausführungsform in Form eines Federelements 41, vorliegend als gekrümmte Blattfeder, ausgebildet ist und sich zwischen den Armen 24 bezogen auf die Steuernockenschwenkachse 21 im Wesentlichen in Umfangsrichtung erstreckt. Wie aus Figur 5 ersichtlich, weist das Federelement 41 auf seiner radial äußeren Seite eine durch den Krümmungsradius 410 angedeutete Krümmung auf, die größer ist als eine mittels des Radius 450 angedeutete Krümmung eines konzentrisch zur Steuernockenschwenkachse 21 vorliegenden geometrischen Teilkreises 45 auf Höhe der Anbindungspunkte des Federelements 41 an die Arme 24 des Interaktionsteils 22.

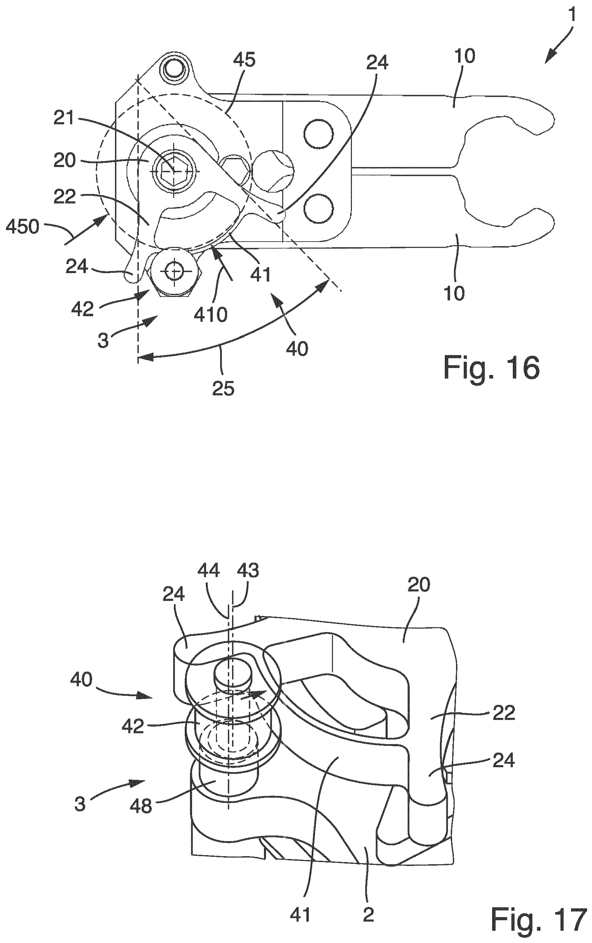

Die Interaktion des Vorspannelements mit dem Anschlag 3 der Klammervorrichtung 1 ist weiter unten in Hinblick auf die Figuren 16 und 17 näher beschrieben.

Mittels des Bezugszeichens 25 ist der Erstreckungswinkel des Interaktionsabschnitts 22 beziehungsweise der Arme 24 in Umfangsrichtung bezogen auf die Steuernockenschwenkachse 21 angedeutet, welcher vorliegend 45° beträgt.

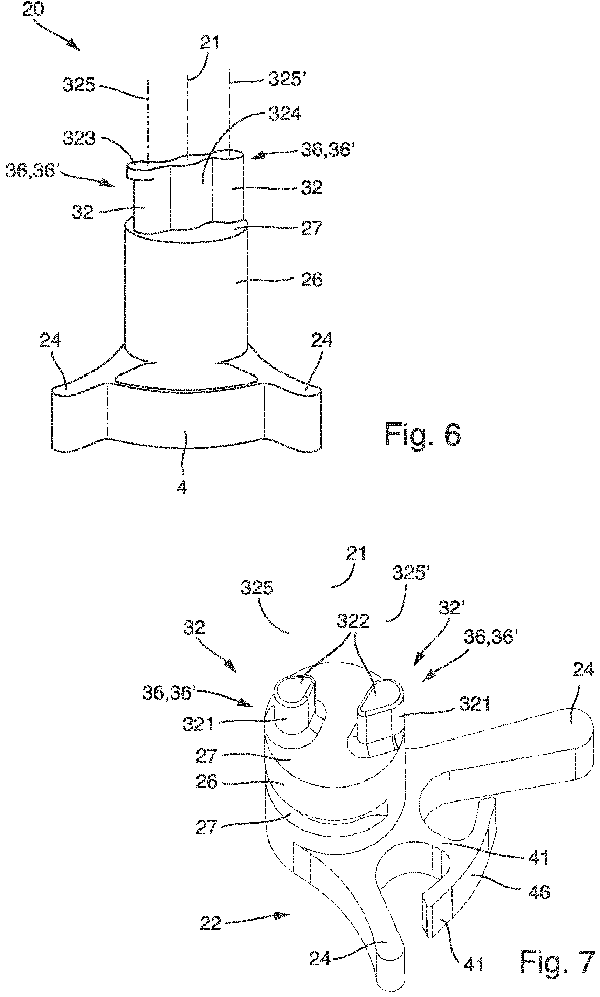

Figur 6 zeigt schematisch eine perspektivische Seitenansicht eines Steuernockens 20 gemäß einer weiteren Ausführungsform, welche im Wesentlichen der Ausführung gemäß Figur 3 entspricht, wobei der Steuerbolzen 32 ferner einen Sicherungssteg 323 gemäß Figur 4 aufweist und entsprechend keine radiale Sicherungsnut vorgesehen ist.

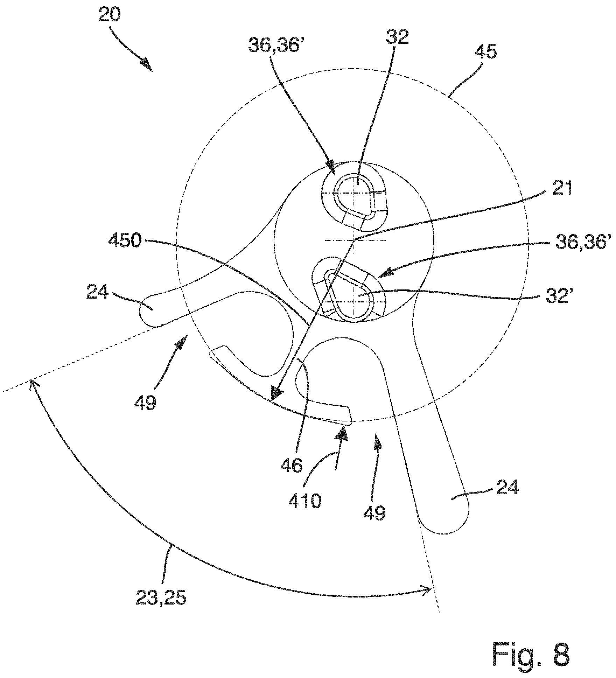

Figur 7 zeigt schematisch eine perspektivische Seitenansicht eines Steuernockens 20 gemäß einer weiteren Ausführungsform, welche in Figur 8 schematisch in einer Draufsicht gezeigt ist. Der Steuernocken 20 entspricht im Wesentlichen jenem aus Figur 2, wobei die Steuerbolzen 32, 32' jeweils zusätzlich zu ihrem kreisbogenförmigen Abschnitt 321 einen Nockenabschnitt 322 umfassen. Ferner weist der Steuernocken 20 eine von den Ausführungen gemäß der Figuren 1 bis 6 unterschiedliches Vorspannelement auf.

Anstelle der durchgehenden Blattfeder, welche an beiden Enden mit den Armen 24 befestigt ist beziehungsweise in diese übergeht, weist der Steuernocken 20 gemäß dieser Ausführungsform ein Vorspannelement auf, welches ausgebildet ist aus einem sich im Wesentlichen mittig zwischen den Armen 24 bis zum Teilkreis 45 nach radial außen erstreckenden Steg 46 und Federelementen 41, die sich am radial außen gelegenen Ende des Steges 46 jeweils in Wesentlichen in Umfangsrichtung beziehungsweise tangential bezogen auf die Steuernockenschwenkachse 21 beidseitig des Steges 46 in Form eines Biegebalkens mit freiem Ende erstrecken, wobei das freie Ende jeweils mit einem vorgegebenen Abstand zu dem jeweiligen Arm 24 endet.

Die Federelemente 41 weisen eine Krümmung auf, die kleiner ist als die Krümmung des Teilkreises 45. Mit anderen Worten ist der Krümmungsradius 410 der Federelemente 41 bezogen auf die Steuernockenschwenkachse 21 größer als der Radius 450 des Teilkreises 45, auf dessen Höhe der Steg 46 endet.

Entsprechend liegen die freien Enden 411 in Bezug auf die Steuernockenschwenkachse 21 radial weiter außen als der Teilkreis 45.

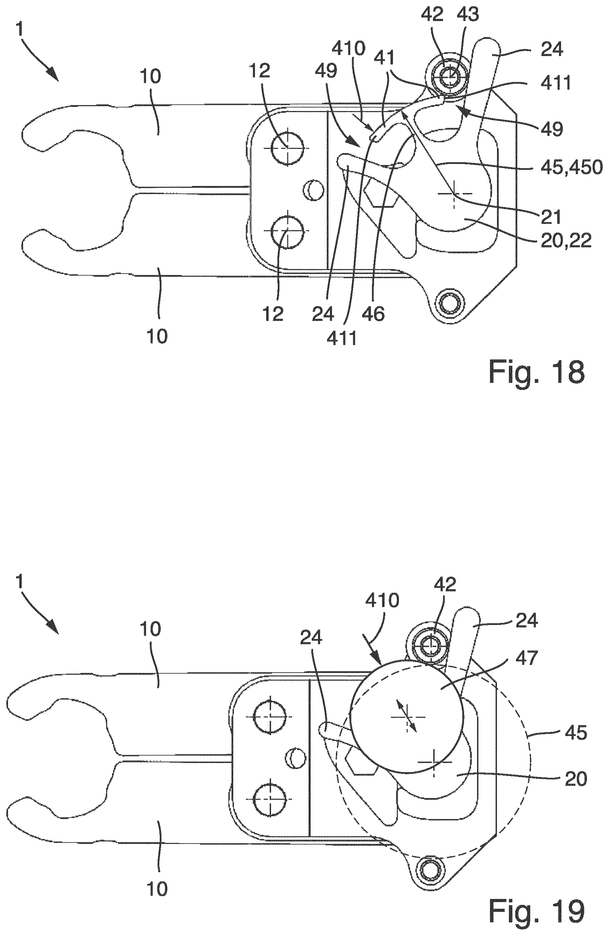

Dadurch, dass beidseitig des Steges 46 jeweils zwischen dem dortigen freien Ende 411 und dem jeweiligen Arm 24 ein Abstand vorliegt, ist eine Aufnahme 49 zum in Umfangsrichtung bezogen auf die Steuernockenschwenkachse 21 betrachtet formschlüssigen Aufnehmen einer Laufrolle 42 der Klammervorrichtung 1 in der jeweiligen Endposition ausgebildet (siehe auch Figur 18).

Die Federelemente 41 sind dabei derart ausgebildet, dass diese durch die in der Aufnahme 49 befindliche Laufrolle 42 um einen vorgegebenen Betrag elastisch gebogen vorliegen. Dadurch stellen sie eine Vorspannkraft auf die Laufrolle 42 bereit, welche die Laufrolle 42 und mithin den Steuernocken 20 in die jeweilige Endposition vorgespannt.

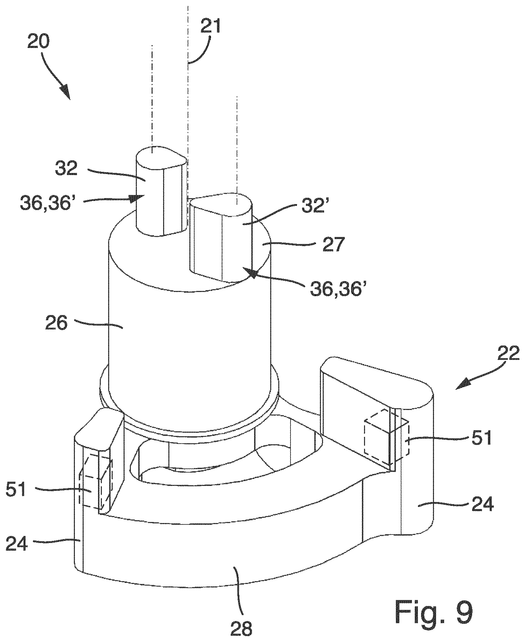

Aus Figur 9 ist schematisch eine weitere Ausführungsform eines Steuernockens 20 zu entnehmen, welcher im Wesentlichen jenem aus den Figuren 7 und 8 entspricht, wobei das Vorspannelement hier in Form eines magnetischen Vorspannelements ausgebildet ist.

Das magnetische Vorspannelement umfasst zwei Magnetelemente 51, die in jedem der Arme 24 angeordnet sind.

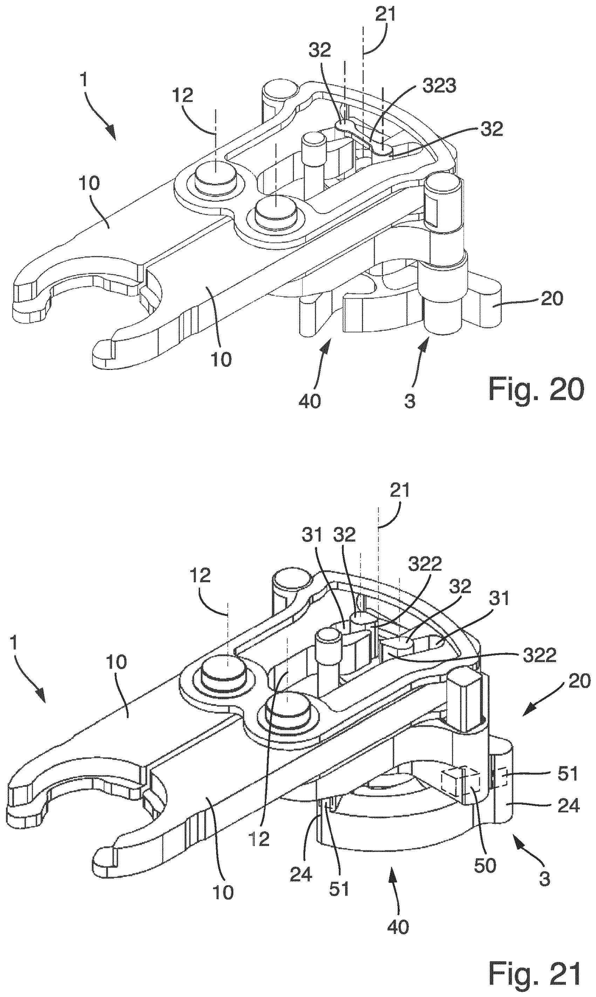

Die Magnetelemente 51 sind derart ausgebildet und angeordnet, dass sie in einem in der Klammervorrichtung 1 eingebauten Zustand des Steuernockens 20 mit einem Magneten 50 des Anschlags 3 der Klammervorrichtung 1 (siehe auch Figur 21) derart wechselwirkt, dass zwischen dem Magneten 50 und dem jeweiligen Magnetelement 51 eine magnetische Anziehungskraft vorliegt, wenn der Steuernocken 20 in einer der Endpositionen vorliegt.

Anstelle der Magnetelemente 51 können auch magnetisierbare oder ferromagnetische Körper in den Armen 24 vorgesehen sein, oder die Arme 24 selbst weisen ein magnetisierbares oder ferromagnetisches Material auf. Ferner ist es möglich, den Magneten 50 durch ein magnetisierbares oder ferromagnetisches Material zu ersetzen, sofern in den Armen 24 dann ein Magnetfeld erzeugende Magnetelemente 51 vorliegen.

Zwischen den Armen 24 erstreckt sich ferner ein bevorzugt kreisringsegmentförmiger Verbindungsbalken 28. Dieser kann ebenso wie die Arme 24 dazu ausgebildet sein, mit einem Magneten 50 des Anschlags 3 wechselzuwirken, derart, dass zwischen dem Verbindungsbalken 28, zumindest einem im Verbindungsbalken 28 vorgesehenen magnetisierbaren oder ferromagnetischen Körper oder Magnetelement (nicht gezeigt), und dem Anschlag 3 eine magnetische Anziehungskraft vorliegt. Dadurch kann der Steuernocken 20 in der Klammervorrichtung 1 axial zur Steuernockenschwenkachse 21 an einer festen Position gehalten werden, ohne dass formschlüssige Elemente, wie etwa die Sicherungsnut 327 oder der Sicherungssteg 323, notwendig sind.

In Figur 10 ist schematisch eine perspektivische Seitenansicht einer Klammervorrichtung 1 zum Halten eines Getränkebehälters in einem Halsabschnitt gezeigt. Die Klammervorrichtung umfasst zwei Klammerarme 10, 10' mit einem Halteabschnitt 11 zum Halten des zu haltenden Behälters. Der Halteabschnitt 11 ist beispielsweise dazu ausgebildet, einen zu haltenden Behälter unterhalb eines Halsrings des Behälters zu greifen. Die Klammerarme 10, 10' sind zum Öffnen und Schließen jeweils um eine Schwenkachse 12 an einer Trägerplatte 2 schwenkbar angeordnet. Die Schwenkachsen 12 sind parallel zueinander orientiert.

Die Klammervorrichtung 1 umfasst ferner einen um eine parallel zu den Schwenkachsen 12 orientierte Steuernockenschwenkachse 21 schwenkbaren Steuernocken 20 gemäß Figur 1. Zum Vorgeben der Position der Halteabschnitte 11 der Klammerarme 10, 10' sind die Klammerarme 10, 10' und der Steuernocken 20 gekoppelt, vorliegend über einen weiter unten näher beschriebenen Koppelmechanismus 30. Aufgrund der Kopplung bewirkt ein Schwenken des Steuernockens 20 um seine Steuernockenschwenkachse 21 ein Schwenken der Klammerarme 10 um deren Schwenkachsen 12, sodass die Halteabschnitte 11 relativ zueinander aufeinander zu oder voneinander weg bewegt werden können, um die Klammervorrichtung 1 zu öffnen und zu schließen. Anders ausgedrückt wird die Bewegung der Halteabschnitte 11 relativ zueinander über den Steuernocken 20 gesteuert.

Der Koppelmechanismus 30 ist ausgebildet aus bzw. umfasst vorliegend zwei jeweils aus einer Langlochnut 31, 31' und dem in der Langlochnut 31; 31' geführten Steuerbolzen 32, 32' ausgebildete Paare von Koppelelementen, wobei jeweils ein Paar aus Langlochnut 31, 31' und Steuerbolzen 32, 32' jeweils einen Klammerarm 10, 10' mit dem Steuernocken 20 koppelt.

Vorliegend ist diese Kopplung dadurch bereitgestellt, dass jeweils ein Klammerarm 10, 10' ein Koppelelement in Form einer Langlochnut 31, 31' aufweist, in welcher der dieser Langlochnut 31, 31' zugeordnete, am Steuernocken 20 angeordnete Steuerbolzen 32, 32', welcher ein zum Koppelelement des Klammerarms 10, 10' korrespondierend ausgebildetes Koppelelement des Steuernockens 20 darstellt, geführt ist.

Die "Führung" des Steuerbolzens 32, 32' in der zugeordneten Langlochnut 31, 31' ist dabei derart ausgebildet, dass der Steuerbolzen 32, 32' sich in einer parallel zur Steuernockenschwenkachse 21 erstreckenden Ebene relativ zur Langlochnut 31, 31' in dieser translatorisch bewegen kann und an den Seitenwänden der Langlochnut 31, 31' abrollen und/oder entlang gleiten kann, mithin sich relativ zur Langlochnut 31, 31' rotatorisch bewegen kann.

Die Langlochnuten 31, 31' erstrecken sich jeweils in Richtung der Steuernockenschwenkachse 21 komplett durch den Klammerarm 10, 10' hindurch. Sie können also als Durchgangsbohrungen mit Langloch-Form verstanden werden.

In Richtung der Steuernockenschwenkachse 21 gesehen weisen die Langlochnuten 31, 31' jeweils im Wesentlichen die Form eines Langlochs auf. Entsprechend erstreckten sie sich in einer senkrecht zur Steuernockenschwenkachse 21 orientierte Längserstreckung 310 von einem ersten Ende 312 zu einem zweiten Ende 312 mit zwischen den beiden Enden 312 im Wesentlichen parallel zueinander verlaufenden Seitenwänden 311.

Vorliegend sind die Langlochnuten 31, 31'jeweils einseitig offen ausgebildet. Mit anderen Worten ist eines der beiden Enden 312 als offenes Ende ausgebildet. Vorliegend ist das offene Ende 312 jeder Langlochnut 31, 31' jeweils das der Steuernockenschwenkachse 21 näher gelegene Ende 312.

Um die Position des Steuernockens 20 in einem an einer Behältertransportvorrichtung einer Behälterbehandlungsvorrichtung eingebauten Zustand verändern zu können, weist dieser einen sich in Bezug auf die Steuernockenschwenkachse 21 nach radial außen erstreckenden Interaktionsteil 22 auf, an welchen beispielsweise ein an einer festen Position der Behälterbehandlungsvorrichtung vorgesehener Interaktionsbolzen anschlagen und so ein Schwenken des Steuernockens 20 bewirken kann.

Um den Bewegungsumfang des Steuernockens 20 um die Steuernockenschwenkachse 21 zu begrenzen, umfasst die Klammervorrichtung 1 ferner einen an der Trägerplatte 2 angeordneten optionalen Anschlag 3, welcher in Bezug auf die Steuernockenschwenkachse 21 in Umfangsrichtung gesehen zwischen zwei sich nach radial nach außen erstreckenden Armen 24 des Steuernockens 20 angeordnet ist. So kann der Steuernocken 20 nur in einem durch die Arme 24 begrenzten Winkel 23, welcher vorliegend 45° ist, um die Steuernockenschwenkachse 21 schwenken. Die Endpositionen des Steuernockens, bei welchen der Steuernocken 20 mit einem seiner Arme 24 am Anschlag 3 anliegt, stellen hierbei Vorgabepositionen hinsichtlich der Öffnungs- und Schließpositionen der Halteabschnitte 11 dar. Eine Endposition stellt entsprechend eine Offenvorgabeposition dar und die andere Endposition stellt eine Schließvorgabeposition dar.

Die Halteabschnitte 11 können entsprechend durch das Schwenken des Steuernockens 20 zwischen einer durch die Schließvorgabeposition vorgegebenen Schließposition, wie in Figur 1 gezeigt, und einer durch die Offenvorgabeposition vorgegebenen Öffnungsposition bewegt werden.

Die Klammervorrichtung 1 umfasst ferner eine Vorspanneinrichtung 40 zum Halten bzw. zum Vorspannen des Steuernockens 21 in einer Vorgabeposition, mithin in der Schließvorgabeposition oder der Offenvorgabeposition, wie später noch näher erläutert.

Die Arme 24 und die Steuerbolzen 32, 32' sind derart ausgebildet, dass ein Hebelarmverhältnis zwischen einem sich zwischen Steuernockenschwenkachse 21 und einem vorgegebenen Angriffspunkt für ein Interaktionselement der Behälterbehandlungsvorrichtung zum Schalten des Steuernockens 20 vorliegenden Hebelarm und den zwischen Steuerbolzen 32, 32' und Steuernockenschwenkachse 21 vorliegenden Hebelarmen zwischen im Wesentlichen 5 zu 1 und 3 zu 1 liegt und bevorzugt im Wesentlichen 4 zu 1 ist. Unter "im Wesentlichen" ist hier zu verstehen, dass Unterschiede, welche sich aus den unterschiedlichen Abständen 320, 320' ergeben, innerhalb der Rundung beziehungsweise Toleranz des Hebelarmverhältnisses liegen. Mit anderen Worten ist der Unterschied der Abstände 320, 320' derart klein, dass die sich daraus ergebenen Unterschiede gegenüber den vorbeschriebenen Hebelarmen vernachlässigt werden können.

Zwischen der Trägerplatte 2 und den Klammerarmen 10 ist eine Gleitplatte 4 vorgesehen, welche eine Gleitlagerung der Klammerarme 10 gegenüber der Trägerplatte 2 bereitstellt.

Ferner ist auch oberhalb der Klammerarme 10 eine Gleitplatte 4 vorgesehen, welche eine Gleitlagerung der Klammerarme 10 gegenüber einer Behältertransportvorrichtung, an welcher die Klammervorrichtung 1 anbringbar ist, bereitstellen soll.

Die Klammerarme 10 und/oder die Trägerplatte 2 können aus einem Metall, bevorzugt einer Stahllegierung ausgebildet sein. Vorzugsweise sind die Gleitplatten 4 aus einem von der Trägerplatte 2 und/oder den Klammerarmen 10 unterschiedlichen Material ausgebildet, beispielsweise einem Kunststoff, einer Kupferlegierung oder Messinglegierung.

Figur 11 zeigt schematisch eine Draufsicht auf eine Klammervorrichtung 1 in einer weiteren Ausführungsform. Die in Figur 11 gezeigt Klammervorrichtung 1 entspricht dennoch im Wesentlichen jener aus Figur 10.

Den Ausführungsformen aus Figur 10 und Figur 11 ist insbesondere gemein, dass die Klammerarme 10, 10' nicht symmetrisch ausgebildet sind, und zwar hinsichtlich des Bereichs um die Langlochnuten 31, 31'. Dadurch kann ein besonders kompakter Aufbau der Klammervorrichtung 1 erzielt werden. In dieser Hinsicht weist die am Klammerarm 10 angeordnete Langlochnut 31 einen ersten Abstand zur Schwenkachse 12 des Klammerarms 10 auf und die am Klammerarm 10' angeordnete Langlochnut 31' einen zweiten Abstand zur Schwenkachse 12' des Klammerarms 10' auf, wobei der Betrag des zweiten Abstands größer ist als der Betrag des ersten Abstands. Die Abstände entsprechen der Länge der Hebelarme.

Damit die beiden Klammerarme 10, 10' bei einem Schwenken des Steuernockens 20 jeweils mit dem gleichen Winkel um ihre jeweilige Schwenkachse 12, 12' schwenken, anders ausgedrückt symmetrisch zueinander schwenken, ist der in der Langlochnut 10 geführte Steuerbolzen 32 mit einem ersten Abstand 320 zur Steuernockenschwenkachse 21 am Steuernocken 20 angeordnet, der kleiner ist als der Abstand des in der Langlochnut 31' geführten zweiten Steuerbolzens 32' zur Steuernockenschwenkachse 21. Die vorstehenden Abstände sind dabei so gewählt, dass das durch das Paar aus Langlochnut 31 und Steuerbolzen 32 bereitgestellte Übersetzungsverhältnis im Wesentlichen dem durch das Paar aus Langlochnut 31' und Steuerbolzen 32' bereitgestellten Übersetzungsverhältnis entspricht.

In der jeweils in den Figuren 10 und 11 gezeigten Schließposition der Halteabschnitte 11 liegt der Steuernocken 20 in der Schließvorgabeposition vor. Dabei sind die Steuerbolzen 32, 32' derart am Steuernocken 20 angeordnet, dass sie in der Schließvorgabeposition des Steuernockens 20 in Richtung der Steuernockenschwenkachse 21 betrachtet auf einer Linie liegen, die senkrecht zu einer durch die beiden Schwenkachsen 12, 12' ausgebildeten Ebene 35 orientiert ist.

Im Unterschied zur Ausführung gemäß Figur 10 sind die Steuerbolzen 32' in der Ausführung gemäß Figur 11 durch eine Verbindungswand 324 verbunden, welche als zwei miteinander verbundene Nockenabschnitte 322 verstanden werden kann. Hierdurch kann zum einen zusätzlich oder alternativ zum optimalen Anschlag 3 (siehe Figur 1) eine Begrenzung der Bewegung des Steuernockens 20 um die Steuernockenschwenkachse 21 bereitgestellt werden. Da die Steuerbolzen 32, 32' über die Verbindungswand 324 verbunden sind, weisen sie bezogen auf die Steuernockenschwenkachse 21 in radialer Richtung gegenüber der Ausführung in Figur 1 eine erhöhte Biegesteifigkeit auf.

Figur 12 zeigt schematisch eine Draufsicht der Klammervorrichtung 1 aus Figur 11 in einer geöffneten Stellung, in welcher die Halteabschnitte 11 in ihrer Öffnungsposition vorliegen. Entsprechend liegt der Steuernocken 20 um den vorgegebenen Winkel 23 von vorliegend 45° geschwenkt zu seiner Orientierung in Figur 11 vor. Über die mittels des vorbeschriebenen Koppelmechanismus 30 bereitgestellte Koppelung des Steuernockens 20 mit den Klammerarmen 10, 10', welche auch als Zwangsführung der Koppelarme 10, 10' durch den Steuernocken 20 verstanden werden kann, sind entsprechend auch die Koppelarme 10, 10' jeweils um ihre Schwenkachse 12, 12' geschwenkt.

Die Steuerbolzen 32, 32' bewegen sich bei einem Schwenken des Steuernockens 20 zwischen der Offenvorgabeposition und der Schließvorgabeposition entlang der ihnen zugeordneten Langlochnuten 31, 31'. Relativ zu den Langlochnut in 31, 31' gesehen umfasst diese Bewegung der Steuerbolzen 32, 32' eine translatorische Bewegungskomponente entlang der Längserstreckung 310 der Langlochnut in 31, 31' und eine rotatorische Bewegungskomponente, mithin eine Gleitbewegung relativ zu den Seitenwänden 311 der Langlochnuten 31, 31'.

Um die letztgenannte rotatorische Bewegungskomponente zu ermöglichen, umfassen die Steuerbolzen 32, 32' bezogen auf ihre jeweilige Längsmittelachse 325 einen gekrümmten Abschnitt, vorliegend in Form eines kreisbogenförmigen Abschnitts 321. Wogegen bei der Ausführungsform gemäß Figur 1 der kreisbogenförmige Abschnitt 321 über den gesamten Umfang der zylindrisch ausgebildeten Steuerbolzen 32, 32' verläuft, ist der kreisbogenförmige Abschnitt 321 bei der Ausführung gemäß der Figuren 2 und 3 jeweils durch die Verbindungswand 324 begrenzt.

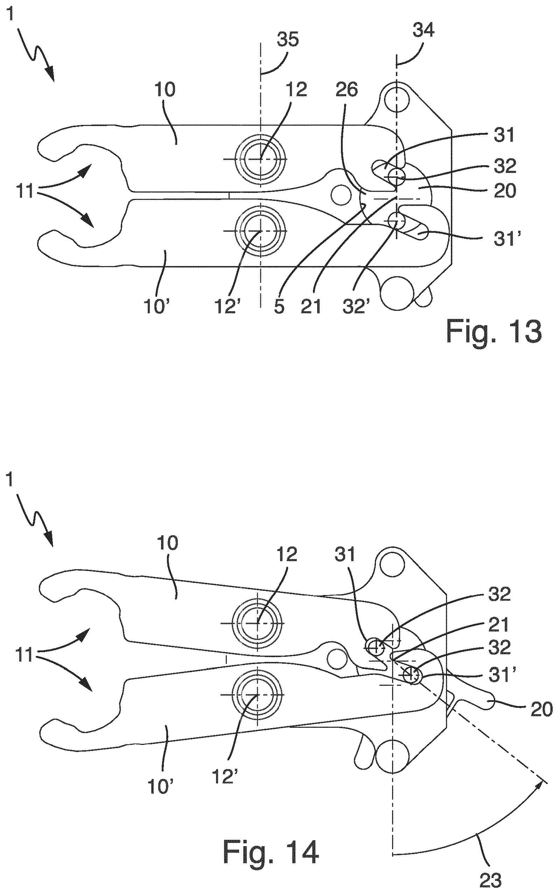

Aus den Figuren 13 und 14 ist jeweils schematisch eine Draufsicht einer Klammervorrichtung 1 gemäß einer weiteren Ausführungsform in einer geschlossenen Stellung (Figur 13) und einer geöffneten Stellung (Figur 14) gezeigt. Die Klammervorrichtung 1 entspricht im Wesentlichen der Klammervorrichtung 1 aus Figur 10.

Im Unterschied zur den Klammervorrichtungen 1 aus Figur 10 und den Figuren 11 und 12 weist die Klammervorrichtung 1 gemäß der Figuren 13 und 14 einen derartigen Aufbau auf, dass die Steuerbolzen 32, 32' in der geschlossenen Stellung der Klammervorrichtung 1, mithin wenn die Halteabschnitte 11 in ihrer Schließposition und demgemäß der Steuernocken 20 in der Schließvorgabeposition vorliegen, senkrecht zur Steuernockenschwenkachse 21 betrachtet auf einer Linie 34 liegen, die im Wesentlichen parallel zu der durch die Schwenkachsen 12, 12' ausgebildeten Ebene 35 liegt. Bei dieser Ausführung kann besonders effektiv verhindert werden, dass durch einen Druck gegen die Halteabschnitte 11, beispielsweise aufgrund eines plötzlichen Stoßes auf einen in der Klammervorrichtung 1 gehaltenen Behälter, die Halteabschnitte 11 durch Schwenken der Klammerarme 10, 10' um ihre Schwenkachsen 12, 12' öffnen.

Figur 15 ist schematisch eine perspektivische Seitenansicht einer Klammervorrichtung 1 gemäß einer weiteren Ausführungsform zu entnehmen, welche im Wesentlichen jener aus Figur 10 entspricht.

Die Klammervorrichtung 1 gemäß Figur 15 weist im Unterschied zur Ausführung gemäß Figur 10 den Steuerbolzen gemäß Figur 4 auf.

Der Sicherungssteg 323 ist wie oben beschrieben ausgebildet in Form eines konzentrisch zur Längsmittelachse 325 des Steuerbolzens 32 angeordneten kreisförmigen Flansches, dessen Außendurchmesser größer ist als die Breite der Langlochnut 31 quer zu deren Längserstreckung 310. Dadurch ist in Richtung der Steuernockenschwenkachse 21 ein Formschluss zwischen dem Klammerarm 10 und dem Steuernocken 20 bereitgestellt, sodass der Steuernocken 20 in der in Figur 15 gezeigten, nicht an eine Behältertransportvorrichtung angebrachten Zustand an dem Klammerarm 10 gehalten ist.

In Hinblick auf die Figuren 16 und 17 wird auf die den Klammervorrichtungen 1 gemäß der Figuren 10 bis 15 gemeinsame Vorspanneinrichtung 40 näher eingegangen.

Dabei zeigen Figur 16 schematisch eine Ansicht von unten der Klammervorrichtung 1 aus Figur 10 und Figur 17 schematisch eine perspektivische Seitenansicht von unten eines Teilbereiches der Klammervorrichtung 1 aus Figur 10.

Die Vorspanneinrichtung 40 ist ausgebildet, den Steuernocken 20 in einer vorgegebenen Endposition, mithin der Offenvorgabeposition oder der Schließvorgabeposition, zu halten beziehungsweise in diese vorzuspannen.

In der Ausführungsform, wie sie den Klammervorrichtungen 1 gemäß der Figuren 10 bis 17 gemein ist, ist die Vorspanneinrichtung 40 bereitgestellt aus dem am Steuernocken 20 angeordneten Vorspannelement, das gemäß dieser bevorzugten Ausführungsform in Form des Federelements 41, vorliegend als gekrümmte Blattfeder, ausgebildet ist und sich zwischen den Armen 24 bezogen auf die Steuernockenschwenkachse 21 im Wesentlichen in Umfangsrichtung erstreckt. Wie aus Figur 16 ersichtlich, weist das Federelement 41 auf dessen Richtung Laufrolle 42 weisenden Seite eine durch den Krümmungsradius 410 angedeutete Krümmung auf, die größer ist als eine mittels des Radius 450 angedeutete Krümmung eines konzentrisch zur Steuernockenschwenkachse 21 vorliegenden geometrischen Teilkreises 45 auf Höhe der Anbindungspunkte des Federelements 41 an die Arme 24 des Interaktionsteils 22.

Wie insbesondere aus Figur 17 zu entnehmen, ist der Anschlag 3 ausgebildet durch eine über einen Lagerbolzen 48 an der Trägerplatte 2 drehbar gelagerte Laufrolle 42, die mit dem Federelement 41 in Kontakt ist beziehungsweise über dieses abrollt, begrenzt durch die die Endpositionen bereitstellenden Arme 24.

Da sich das Federelement 41 gegenüber dem Teilkreisdurchmesser 45 bezogen auf die Steuernockenschwenkachse 21 aufgrund des kleineren Krümmungsradius 410 im Vergleich zum Radius 450 nach radial außen wölbt, übt das Federelement 41 eine Federkraft auf die Laufrolle 42 aus, welche in der Mitte des Federelementes 41 am größten ist, und dadurch die Laufrolle 42 in die jeweilige Endposition vorspannt. Durch diese Vorspannung liegen der Steuernocken 20 und entsprechend die Klammerarme 10 in einem stabilen Zustand vor, nämlich entweder in der Öffnungsposition oder der Schließposition.

Um die Klammerarme 10 aus der jeweiligen Position zu bewegen, muss der Steuernocken 20 gegen die via des Federelementes 41 bereitgestellte Spannung bewegt werden. Mit anderen Worten muss die bei einem Rollen der Laufrolle 42 über das Federelement 41 durch die daraus resultierende elastische Biegung erzeugte Federkraft des Federelementes 41 entstehende Kraft überwunden werden, um eine Relativbewegung von Laufrolle 42 und Steuernocken 20 zu ermöglichen. Ist der Scheitel, mithin die Mitte des Federelementes 41 überwunden, so unterstützt die durch das Federelement 41 aufgrund dessen Biegung bereitgestellte Federkraft die Bewegung des Steuernockens 20 in die jeweilige Endposition.

Der Anschlag 3, hier in Form der an der Trägerplatte 2 gelagerten Laufrolle 42, ist mithin als Anschlagelement zur verstehen, welches ausgebildet ist, mit dem vorliegend als Federelement 41 bereitgestellten Vorspannelement des Steuernockens 20 derart zu interagieren, dass der Steuernocken 20 in die Offenvorgabeposition vorgespannt ist, wenn sich der Steuernocken 20 in der Offenvorgabeposition befindet, und in die Schließvorgabeposition vorgespannt ist, wenn sich der Steuernocken 20 in der Schließvorgabeposition befindet.

Mittels des Bezugszeichens 25 ist der Erstreckungswinkel des Interaktionsabschnitts 22 beziehungsweise der Arme 24 in Umfangsrichtung bezogen auf die Steuernockenschwenkachse 21 angedeutet, welcher vorliegend 45° beträgt.

Wie aus Figur 17 zu entnehmen, ist die Laufrolle 42 exzentrisch zu einem an der Trägerplatte 2 drehfest angebrachten Lagerbolzen 48 am Lagerbolzen 48 gelagert. Entsprechend weist die Drehachse 43 der Laufrolle 42 einen vorgegebenen Abstand zur Lagermittelachse 44 des Lagerbolzen 48 auf.

Durch ein Verdrehen der Orientierung des Lagerbolzen 48 um dessen Lagermittelachse 44 kann so eine durch das Federelement 41 bereitgestellte Vorspannkraft verändert werden. Entsprechend lässt sich so auch eine Haltekraft der Klammerarme in der jeweiligen Endposition, hier der geschlossenen Stellung, mithin wenn der Steuernocken 20 sich in der Schließvorgabeposition befindet, einstellen.

In einer alternativen Ausführungsform kann der Lagerbolzen 48 bezogen auf die Lagermittelachse 44 in Umfangsrichtung vorgespannt sein, derart, dass die Lagerrolle 42 bezogen auf die Steuernockenschwenkachse 21 in radialer Richtung auf den Steuernocken 20 zu gedrückt wird, bevorzugt, indem eine hier nicht gezeigte Torsionsfeder zwischen Trägerplatte 2 und Lagerbolzen 48 vorgesehen ist.

Wenn bei dieser Ausführungsform zusätzlich das Federelement 41 vorgesehen ist, setzt sich die Vorspannkraft, welche den Steuernocken 20 in einer der Endpositionen hält, aus der Federkraft auf Seiten der Lagerrolle 42 und der Federkraft auf Seiten des Federelementes 41 zusammen.

Alternativ kann bei einer derartigen federnden Lagerung der exzentrisch zur Lagermittelachse 44 drehgelagerten Laufrolle 42 anstelle des elastischen Federelementes 41 ein starres Element, welches analog zum Federelement 41 eine Krümmung aufweist, die größer ist als die des Teilkreises 45 vorgesehen sein. Dann wird die Vorspannkraft zum Halten des Steuernockens 20 in eine der Endpositionen allein durch das Federelement (nicht gezeigt) auf Seiten der Laufrolle 42 bereitgestellt.

Die Form der Arme 24 und die Lage der Laufrolle 42 sind derart vorgegeben, dass ein Hebelarmverhältnis zwischen einem sich zwischen der Steuernockenschwenkachse 21 und dem Kontaktbereich der Laufrolle 42 an den Armen 24 vorliegenden Hebelarm und den zwischen Steuerbolzen 32. 32' und der Steuernockenschwenkachse 21 jeweils vorliegenden Hebelarmen zwischen im Wesentlichen 6 zu 1 und 2 zu 1 liegt und bevorzugt im Wesentlichen 5 zu 1, 4 zu 1 oder 3 zu 1 ist. Unter "im Wesentlichen" ist hier zu verstehen, dass Unterschiede, welche sich aus den unterschiedlichen Abständen 320, 320' ergeben, innerhalb der Rundung beziehungsweise Toleranz des Hebelarmverhältnisses liegen. Mit anderen Worten ist der Unterschied der Abstände 320, 320' derart klein, dass die sich daraus ergebenen Unterschiede gegenüber den vorgeschriebenen Hebelarmen vernachlässigt werden können.

Aus Figur 18 ist schematisch eine Ansicht von unten einer Klammervorrichtung 1 gemäß einer weiteren Ausführungsform zu entnehmen. Die Klammervorrichtung 1 entspricht im Wesentlichen jener aus Figur 17, mit Ausnahme der Ausgestaltung der Vorspanneinrichtung 40. Anstelle der durchgehenden Blattfeder, welche an beiden Enden mit den Armen 24 befestigt ist beziehungsweise in diese übergeht, weist der der Ausführungsform gemäß Figur 7 und 8 entsprechende Steuernocken 20 gemäß dieser Ausführungsform ein Vorspannelement in Form des sich im Wesentlichen mittig zwischen den Armen 24 bis zum Teilkreis 45 nach radial außen erstreckenden Steges 46 und den an dessen radial außen gelegenen Ende sich in Wesentlichen in Umfangsrichtung beziehungsweise tangential dazu bezogen auf die Steuernockenschwenkachse 21 beidseitig erstreckenden Federelementen 41 in Form eines Biegebalkens mit freiem Ende, wobei das freie Ende jeweils mit einem vorgegebenen Abstand zu dem jeweiligen Arm 24 endet.

Die Federelemente 41 weisen wie oben beschrieben eine Krümmung auf, die kleiner ist als die Krümmung des Teilkreises 45. Mit anderen Worten ist der Krümmungsradius 410 der Federelemente 41 bezogen auf die Steuernockenschwenkachse 21 größer als der Radius 450 des Teilkreises 45, auf dessen Höhe der Steg 46 endet.

Entsprechend liegen die freien Enden 411 in Bezug auf die Steuernockenschwenkachse 21 radial weiter außen als der Teilkreis 45. Die das Anschlagelement ausbildende Laufrolle ist 42 vorliegend derart gelagert, dass sie, fehlte theoretisch betrachtet der Steg 46, auf dem Teilkreis 45 abrollen würde.

Dadurch, dass beidseitig des Steges 46 jeweils zwischen dem dortigen freien Ende 411 und dem jeweiligen Arm 24 ein Abstand vorliegt, ist dadurch eine Aufnahme 49 zum in Umfangsrichtung bezogen auf die Steuernockenschwenkachse 21 betrachtet formschlüssigen Aufnehmen der Laufrolle 42 in der jeweiligen Endposition ausgebildet.

Die Federelemente 41 sind dabei derart ausgebildet, dass diese durch die in der Aufnahme 49 befindliche Laufrolle 42 um einen vorgegebenen Betrag elastisch gebogen vorliegen. Dadurch stellen sie eine Vorspannkraft auf die Laufrolle 42 bereit, welche die Laufrolle 42 in die jeweilige Endposition vorgespannt.

Um die Laufrolle 42 aus der jeweiligen Endposition zu bewegen, muss der Steuernocken 20 entgegen der durch das Federelement 41 bereitgestellten Vorspannung geschwenkt werden. Diese Ausführungsform stellt ein besonders sicheres Halten der Laufrolle 42 beziehungsweise des Steuernockens 20 in einer der Endpositionen bereit, da die via des Federelementes 41 auf die Laufrolle 42 bereitgestellte Vorspannkraft in den Endpositionen am größten ist.

Die Laufrolle 42 kann optional analog zur Ausführungsform aus Figur 17 exzentrisch zur Lagermittelachse 44 gelagert und/oder gegen den Steuernocken vorgespannt sein.

Aus Figur 19 ist schematisch eine Ansicht von unten einer Klammervorrichtung 1 gemäß einer weiteren Ausführungsform zu entnehmen. Die Klammervorrichtung 1 entspricht im Wesentlichen jener aus Figur 17, mit Ausnahme der Ausgestaltung der Vorspanneinrichtung 40. Anstelle des als durchgehende Blattfeder bereitgestellten Federelementes 41 ist bezogen auf die Steuernockenschwenkachse 21 radial beabstandet zu dieser ein das Vorspannelement bereitstellender Bolzen 47 in radialer Richtung federnd am Steuernocken 20 gelagert. Der Bolzen 47 weist analog zur Ausführungsform in Figur 17 eine Krümmung, angedeutet durch den Krümmungsradius 410, auf, die größer ist als die Krümmung des Teilkreises 45. Der Bolzen 47 ist aufgrund seiner federnden Lagerung gegen die Laufrolle 42 in radialer Richtung nach außen weisend vorgespannt. Entsprechend ist die Laufrolle 42 durch den Bolzen 47 in einer der Endpositionen gehalten.

Die als Anschlagelement fungierende Laufrolle 42 kann optional analog zur Ausführungsform aus Figur 17 exzentrisch zur Lagermittelachse 44 gelagert und/oder gegen den Steuernocken vorgespannt sein.

Figur 20 zeigt schematisch eine perspektivische Seitenansicht einer Klammervorrichtung 1 gemäß einer weiteren Ausführungsform, welche im Wesentlichen jener aus Figur 18 entspricht.

Bei dieser Ausführungsform sind die Steuerbolzen 32 analog zur Ausführung in Figur 10 als sich parallel zur Steuernockenschwenkachse 21 erstreckende Zylinderstifte ausgebildet. An ihren stirnseitigen Enden sind diese oberhalb der Klammerarme 10 über einen Sicherungssteg 323 verbunden, welcher sich zwischen den beiden Steuerbolzen 32 erstreckt.

Der Sicherungssteg 323 entspricht in seiner Funktonalität jenem wie in Hinblick auf Figur 15 beschrieben. Zusätzlich stellt er eine im Vergleich zur Ausführungsform aus Figur 10 erhöhte Biegesteifigkeit der Steuerbolzen 32 in radialer Richtung bezogen auf die Steuernockenschwenkachse 21 bereit.

Figur 21 zeigt schematisch eine perspektivische Seitenansicht einer Klammervorrichtung 1 gemäß einer weiteren Ausführungsform, welche im Wesentlichen jener aus Figur 10 entspricht.

Die Steuerbolzen 32 gemäß dieser Ausführungsform weisen in Unterschied zur Ausführung gemäß Figur 10 jeweils einen Nockenabschnitt 322 wie bereits hinsichtlich des Steuerbolzens 32' aus Figur 15 beschrieben auf.

Ferner ist die Vorspanneinrichtung 40 als magnetische Vorspanneinrichtung 40 ausgebildet. Zu diesem Zwecke weist der als Anschlagelement fungierender Anschlag 3 einen Magneten 50 auf, welcher mit einem in jedem der Arme 24 vorgesehenen Magnetelement 51 des analog zu Figur 9 ausgebildeten Steuernockens 20 derart wechselwirkt, dass zwischen dem Magneten 50 und dem jeweiligen Magnetelement 51 eine magnetische Anziehungskraft vorliegt, wenn der Steuernocken 20 in einer der Endpositionen vorliegt. Durch die magnetische Anziehungskraft wird der Steuernocken 20 in der jeweiligen Endposition gehalten. Um den Steuernocken 20 aus der jeweiligen Endposition zu bewegen, muss die magnetische Anziehungskraft überwunden werden. Die in den Armen 24 angeordneten Magnetelemente 51 bilden mithin das Vorspannelement des Steuernockens aus, welches dazu eingerichtet ist, mit dem als Anschlagelement fungierenden Anschlag 3 bzw. genauer mit dessen Magneten 50 derart zu interagieren, dass der Steuernocken 20 in die Offenvorgabeposition vorgespannt ist, wenn sich der Steuernocken 20 in der Offenvorgabeposition befindet, und in die Schließvorgabeposition vorgespannt ist, wenn sich der Steuernocken 20 in der Schließvorgabeposition befindet.

Anstelle der Magnetelemente 51 können auch ferromagnetische Körper in den Armen 24 vorgesehen sein. Ferner ist es möglich, den Magneten 50 durch ein ferromagnetisches Material zu ersetzen, sofern in den Armen 24 dann ein Magnetfeld erzeugende Magnetelemente 51 vorliegen.

Figur 22 zeigt schematisch eine Draufsicht einer Klammervorrichtung 1 gemäß einer weiteren Ausführungsform, welche im Wesentlichen jener aus Figur 10 entspricht, wobei die Vorspanneinrichtung 40 eine magnetische Vorspanneinrichtung gemäß Figur 21 ist.

Der Koppelmechanismus 30 unterscheidet sich zudem darin, dass die Steuerbolzen 32 auf Seiten der Klammerarme 10 vorgesehen sind. Sie erstrecken sich von einer in Figur 22 als Unterseite der Klammerarme 10 zu betrachtenden Seite, welche eine Richtung Steuernocken 20 weisenden Seite der Klammerarme 10 darstellt, parallel zur Steuernockenschwenkachse 21 mit einer vorgegebenen Länge in Richtung des Steuernockens 20.

Jeder der Steuerbolzen 32 ist in einer an einer Richtung Klammerarmen 10 weisenden Stirnseite 27, in Figur 22 die Oberseite des Steuernockens 20, vorgesehenen, als Koppelelement des Steuernockens 20 fungierende, sacklochartigen Langlochnut 31 geführt.

Die Steuerbolzen 32 sind jeweils an ihrem Klammerarm 10 mit einem Abstand beziehungsweise mit einem Radius 326 beabstandet von der Schwenkachse 12 des jeweiligen Klammerarms 10 angeordnet. Mit anderen Worten schwenken sie auf dem Radius 326 um die jeweilige Schwenkachse 12.

Die Figuren 23 und 24 zeigen schematisch eine Draufsicht und eine Seitenansicht auf einen oberen Teil eines Steuernockens 20 analog zur Ausführungsform gemäß Figur 22, wobei bei dieser Ausführungsform die Langlochnuten 31 einseitig offen ausgebildet sind. Mit anderen Worten sind die bezogen auf die Steuernockenschwenkachse 21 radial außen gelegenen Enden 312' als freie beziehungsweise offene Enden 312' ausgebildet. So kann beispielsweise Reinigungsfluid, welches bei einer Reinigung einer die Klammervorrichtung 1 aufweisenden Behälterbehandlungsvorrichtung in die Langlochnuten 31 eintritt, an den offenen Enden 312' wieder aus den Langlochnuten 31 abfließen.

Aus Figur 24 ist die Ausbildung der Langlochnuten 31 als Sackloch zu erkennen. Die Langlochnuten 31 erstrecken sich von der Stirnseite 27 mit einer vorgegebenen Tiefe parallel zur Steuernockenschwenkachse 21 in den Steuernocken 20.

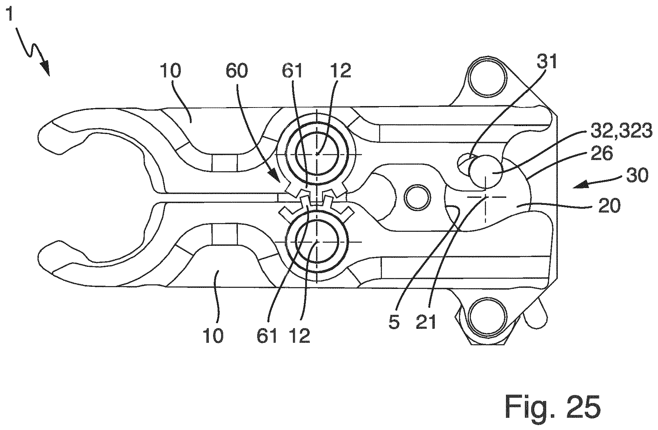

Figur 25 zeigt schematisch eine Klammervorrichtung 1 gemäß einer weiteren Ausführungsform. Die Klammervorrichtung 1 entspricht im Wesentlichen jener aus Figur 10, mit den folgenden Unterschieden:
Der Koppelmechanismus 30 umfasst genau ein Paar aus Langlochnut 31 und Steuerbolzen 32. Hierbei koppelt das Paar aus Langlochnut 31 und Steuerbolzen 32 einen der Klammerarme 10 direkt mit dem Steuernocken 20. Dieser Klammerarm 10 ist ferner mit dem anderen Klammerarm 10' über ein Getriebe 60 drehgekoppelt.

Mit anderen Worten umfasst der Koppelmechanismus 30 gemäß dieser Ausführungsform das genau eine Paar aus Langlochnut 31 und Steuerbolzen 32, um über eine Bewegung des Steuernockens 20 den ersten Klammerarm 10 zu bewegen, und ferner umfasst der Koppelmechanismus 30 ein Drehkopplungseinheit, vorliegend ausgebildet in Form des Getriebes 60 zum Koppeln des ersten Klammerarmes 10 mit dem zweiten Klammerarm 10', um so eine indirekte, über den Klammerarm 10 laufende Kopplung des zweiten Klammerarms 10' mit dem Steuerbolzen 20 bereitzustellen.

Entsprechend weist der Steuernocken 20 genau ein Koppelelement, hier in Form des Steuerbolzens 32 auf. Alternativ könnte der Steuernocken 20 auch genau eine Langlochnut analog zu den Figuren 22 bis 24 aufweisen, in welcher ein dann an einem der Klammerarme 10 angeordneter Steuerbolzen 32 wie oben beschrieben aufgenommen ist, um die Kopplung zwischen dem Steuernocken 20 und dem einen Klammerarm 10 bereitzustellen.

Beide Klammerarme 10, 10' weisen jeweils einen zahnradförmigen Verzahnungsabschnitt 61 auf, der im Wesentlichen konzentrisch zur Schenkachse 12 des jeweiligen Klammerarmes 10, 10' angeordnet ist und sich senkrecht zu dieser erstreckt. Die Verzahnungsabschnitte 61 stehen miteinander in Eingriff, so dass dadurch die Drehkopplung zwischen den Klammerarmen 10, 10' ausgebildet ist.

Der Steuerbolzen 32 umfasst ferner einen Sicherungssteg 323 analog zur Ausführungsform aus Figur 15.

Figur 26 zeigt schematisch eine Draufsicht in Richtung der Steuernockenschwenkachse 21 eines Details des Steuernockens 20 der Klammervorrichtung 1 aus Figur 13, wobei der besseren Übersicht halber lediglich einer der beiden Steuerbolzen 32 dargestellt ist. Die nachfolgend auf den Steuerbolzen 32 bezogene Beschreibung trifft auch auf den anderen Steuerbolzen 32' zu welcher hier aus Übersichtlichkeitsgründen nicht gezeigt ist.

In Figur 26 ist, wie aus Figur 13 zu entnehmen, der Steuernocken in der Schließvorgabeposition positioniert. Entsprechend spannt er die Klammerarme 10, 10' in die Schließposition vor. Hierzu überträgt der Steuerbolzen 32 an seiner Kontaktstelle zur Seitenwand 311' des hier mittels gestrichelter Linie angedeuteten Langlochnut 31 des Klammerarms 10 eine via der Vorspanneinrichtung 40 bereitgestellte Kraft 37' auf den Klammerarm 10. Diese Kraft 37' kann als Schließkraft 37' verstanden werden, da durch diese die Klammerarme 10 in Schließposition gedrückt werden bzw. in der Schließposition gehalten werden. Die vorgenannte aktuelle Kontaktstelle des Schließbolzens 20 kann als ein erster Koppelflächengrenzpunkt 37' verstanden werden.

Wird ein Schaltvorgang initiiert, bei welchem der Steuernocken 20 aus seiner in Figur 26 gezeigten Schließvorgabeposition um den Winkel 23 in die in Figur 27 gezeigte Offenvorgabeposition geschwenkt wird, so kommt der Steuernocken 20 mit Einleiten des Schaltvorgangs in eine Schwenkrichtung 13, mithin wenn der Steuernocken 20 sich noch im Wesentlichen - ein zwischen Langlochnut 31 und Steuerbolzen 32 vorliegendes Spiel ausgenommen - in der Schließvorgabeposition befindet, mit der der (ersten) Seitenwand 311' der Langlochnut 31 gegenüberliegenden (zweiten) Seitenwand 311 der Langlochnut 31 in Kontakt und bildet mit der (zweiten) Seitenwand 311 analog zur vorgenannten Kontaktstelle eine Kontaktstelle aus. Diese initiale Kontaktstelle mit der Seitenwand 311 kann als erster Koppelflächengrenzpunkt 37 des Steuerbolzens 21 verstanden werden. Der Steuernocken übt nun eine schaltende Kraft 16, hier entsprechend eine Öffnungskraft, auf den Klammerarm 10, was ein Schwenken des Klammerarmes 10 aus der Schließposition bewirkt.

Der Begriff "Koppelflächengrenzpunkt" ist nicht auf einen Punkt im geometrischen Sinne beschränkt, sondern umfasst die einem Fachmann allgemein bekannten Kontaktarten aus Punktkontakt, Linienkontakt und Flächenkontakt. Beispielsweise bildet jeweils eine Seitenwand eines Nockenabschnitts 322 eines Steuernockens 32, wie etwa in Figur 7 gezeigt, einen Koppelflächengrenzpunkt im Sinne eines Flächenkontaktes auf.

In Figur 27 ist schematisch eine weitere Draufsicht senkrecht zur Steuernockenschwenkachse 21 des Details des Steuerbolzens 21 aus Figur 26 gezeigt, wobei der Steuernocken 20 aus der in Figur 26 gezeigten Schließvorgabeposition um den Winkel 23 in die Offenvorgabeposition geschwenkt wurde und entsprechend in der Offenvorgabeposition vorliegt (vgl. Figur 14). Die Schließvorgabeposition ist hierbei mit dem Bezugszeichen 15 und die Offenvorgabeposition 14 mit dem Bezugszeichen 14 angedeutet. Der Steuernocken 32 ist während des Bewegens aus der Schließvorgabeposition in die Offenvorgabeposition mit einem Teil seines kreisbogenförmigen Abschnitts 321 von dem ersten Koppelflächengrenzpunkt 37 bis zu einem zweiten Koppelflächengrenzpunkt 38 über die Seitenwand 311 der Langlochnut 31 des zu steuernden Klammerarms 10 geglitten.

Der Steuerbolzen 32 umfasst mithin eine sich zwischen dem ersten Koppelflächengrenzpunkt 37 und dem zweiten Koppelflächengrenzpunkt 38 erstreckende erste Koppelfläche 36, die ausgebildet und eingerichtet ist, auf die Langlochnut 31, genauer auf deren Seitenwand 311, welche entsprechend als Kopplungsfläche 39 der Langlochnut 31 zum Koppeln mit der Koppelfläche 36 verstanden werden kann, eine erste schaltende Kraft 16, hier als Öffnungskraft ausgebildet, zu übertragen, und - sofern der Steuerbolzen 20 in der Offenvorgabeposition in diese vorgespannt ist - eine vorspannende Kraft 16 zum Vorspannen der Klammerarme 10 in die Öffnungsposition auf die Klammerarme 10 zu übertragen.

Mittels des Bezugszeichen 23' ist ein Schwenken des Steuernockens 20 aus der Offenvorgabeposition 14 (zurück) in die Schließvorgabeposition 15 angedeutet. Analog zum Vorstehenden kommt der bei Steuernocken 32 Initiierung des Schwenkvorgangs mit einem zweiten Koppelflächengrenzpunkt 38' mit der Seitenwand 311' in Kontakt, so dass er eine zweite schaltende Kraft 16', hier eine Schließkraft, übertragen kann, welche der ersten schaltenden Kraft 16, mithin der Öffnungskraft, entgegengerichtet ist.

Unter "entgegengerichtet" ist hier zu verstehen, dass die erste schaltende Kraft 16 und die zweite schaltende Kraft 16' bezogen auf die Steuernockenschwenkachse 21 jeweils eine Umfangskomponente aufweisen, wobei die Umfangskomponente der ersten schaltenden Kraft 16 und die Umfangskomponente der zweiten schaltenden Kraft 16' entgegengesetzt, mithin gegensinnig, orientiert sind.

Der Steuernocken 20 umfasst mithin eine von der ersten Koppelfläche 36 verschiedene zweite Koppelfläche 36'. Die Koppelflächen 36, 36' sind in Bezug auf den Steuerbolzen 32, insbesondere auf seine Kontur bzw. Querschnittkontur senkrecht zur Steuernockenschwenkachse 21, und/oder in Bezug auf die Längsmittelachse 325, gegenüberliegend angeordnet. So können alternierend die beiden schaltenden und vorzugsweise vorspannenden Kräfte 16, 16' via des Steuerbolzens 32 zum Schalten und/oder Vorspannen vom Steuernocken 20 auf die Klammerarme 10, 10' übertragen werden.

Analog zum Vorstehenden sind auch die Kopplungsflächen 39, 39' der Langlochnut 31, welche gemäß dieser optionalen Ausführungsform im Wesentlichen der Länge der Seitenwände 311, 311' entsprechen, in Bezug auf die Langlochnut 31, insbesondere auf deren Kontur bzw. Querschnittkontur senkrecht zur Steuernockenschwenkachse 21, und/oder in Bezug auf die Längserstreckung 310, gegenüberliegend angeordnet.

Dadurch, dass der Steuerbolzen 32 die sich in Richtung der Steuernockenschwenkachse 21 erstreckende, zum Übertragen der ersten schaltenden Kraft 16 auf den Klammerarm 10 ausgebildete und eingerichtete erste Koppelfläche 36 und die von der ersten Koppelfläche 36 verschiedene, sich in Richtung der Steuernockenschwenkachse 21 erstreckende, zum Übertragen der der ersten schaltenden Kraft 16 entgegengerichteten zweiten schaltenden Kraft 16' auf den Klammerarm 10 ausgebildete und eingerichtete zweite Koppelfläche 36' aufweist, kann via des als Koppelelement fungierenden Steuerbolzens 32 eine permanente Zwangsführung der Klammerarme 10, 10' sowohl beim Öffnen als auch beim Schließen und vorzugsweise ebenso eine Vorspannung der Klammerarme 10, 10' in die Öffnungsposition bzw. die Schließposition bereitgestellt werden.

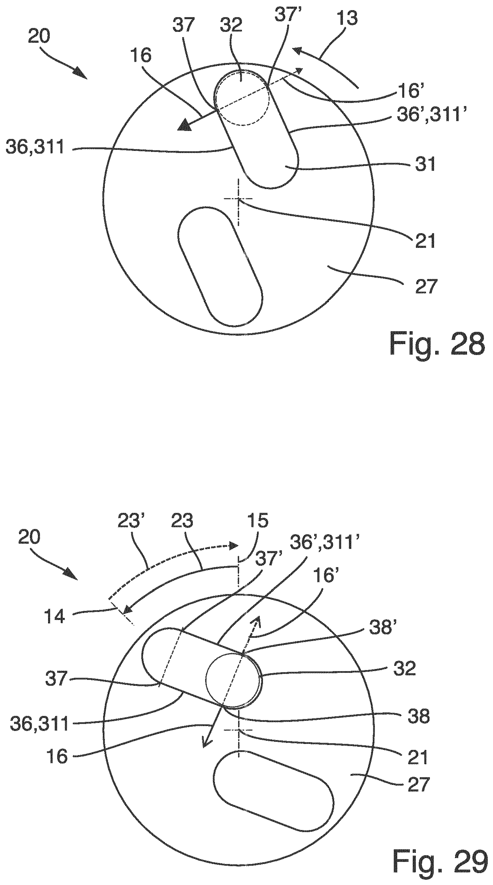

Aus den Figuren 28 und 29 sind Draufsichten in Richtung der Steuernockenschwenkachse 21 eines Details des Steuernockens 20 der Klammervorrichtung 1 aus Figur 22 zu entnehmen, wobei der Steuernocken in Figur 28 in der Schließvorgabeposition und in Figur 29 in der Offenvorgabeposition orientiert ist.

Analog zur Beschreibung hinsichtlich der Figuren 26 und 27 umfasst das hier als Langlochnut 31 ausgebildete Koppelelement des Steuernockens 20 eine erste Koppelfläche 36, die sich zwischen einem ersten Koppelflächengrenzpunkt 37 und einem zweiten Koppelflächengrenzpunkt 38 erstreckt, und eine zweite Koppelfläche 36', die sich zwischen einem ersten Koppelflächengrenzpunkt 37' und einem zweiten Koppelflächengrenzpunkt 38' erstreckt. Weiter analog zu Figuren 26 und 27 ist die erste Koppelfläche 36 zum Übertragen der ersten schaltenden Kraft 16, hier der Öffnungskraft und vorspannenden Kraft in die Öffnungsposition, auf den Klammerarm 10 ausgebildet und eingerichtet. Ferner ist die von der ersten Koppelfläche 36 verschiedene, sich in Richtung der Steuernockenschwenkachse 21 erstreckende zweite Koppelfläche 36' zum Übertragen der der ersten schaltenden Kraft 16 entgegengerichteten zweiten schaltenden Kraft 16', hier der Schließkraft und vorspannenden Kraft in die Schließposition, auf den Klammerarm 10 ausgebildet und eingerichtet.

Weiterhin analog sind die Koppelflächen 36, 36' in Bezug auf die Langlochnut 31, insbesondere auf deren Kontur bzw. Querschnittkontur senkrecht zur Steuernockenschwenkachse 21, und/oder in Bezug auf deren Längserstreckung 310, gegenüberliegend angeordnet. So können alternierend die beiden schaltenden und vorzugsweise vorspannenden Kräfte 16, 16' via der Langlochnut 31 zum Schalten und/oder Vorspannen vom Steuernocken 20 auf die Klammerarme 10, 10' übertragen werden.

Die Koppelfläche 36 entspricht einem Teil der Länge der Seitenwand 311 und die Koppelfläche 36' entspricht einem Teil der Seitenwand 311'.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Klammervorrichtung
- 2.: Trägerplatte
- 3: Anschlag
- 4: Gleitplatte
- 5: Nabenabschnitt

- 10: Klammerarm
- 11: Halteabschnitt
- 12: Schwenkachse
- 13: Schwenkrichtung
- 14: Offenvorgabeposition
- 15: Schließvorgabeposition
- 16: Kraft

- 20: Steuernocken
- 21: Steuernockenschwenkachse
- 22: Interaktionsteil
- 23: Winkel
- 24: Arm
- 25: Erstreckungswinkel
- 26: Wellenabschnitt
- 27: Stirnseite
- 28: Verbindungsbalken

- 30: Koppelmechanismus
- 31: Langlochnut
- 310: Längserstreckung
- 311: Seitenwand
- 312: Ende
- 32: Steuerbolzen
- 320: Abstand
- 321: Kreisbogenförmiger Abschnitt
- 322: Nockenabschnitt
- 323: Sicherungssteg
- 324: Verbindungswand
- 325: Längsmittelachse
- 326: Radius
- 327: Sicherungsnut
- 33: Getriebe
- 34: Linie
- 35: Ebene
- 36: Koppelfläche
- 37: Erster Koppelflächengrenzpunkt
- 38: Zweiter Koppelflächengrenzpunkt
- 39: Kopplungsfläche

- 40: Vorspanneinrichtung
- 41: Federelement
- 410: Krümmungsradius
- 411: Freies Ende
- 42: Laufrolle
- 43: Drehachse
- 44: Lagermittelachse
- 45: Teilkreis
- 450: Radius
- 46: Steg
- 47: Bolzen
- 48: Lagerbolzen
- 49: Aufnahme
- 50: Magnetelement
- 51: Magnet
- 60: Getriebe
- 61: Verzahnungsabschnitt

## Patentansprüche

1. Steuernocken (20) zum Steuern der Position von zueinander schwenkbaren Klammerarmen (10) einer Klammervorrichtung (1), umfassend einen Wellenabschnitt (26) zum schwenkbaren Lagern des Steuernockens (20) um eine Steuernockenschwenkachse (21) in einem Nabenabschnitt (5) einer Trägerplatte (2) der Klammervorrichtung (1), wobei der Steuernocken (20) zwischen einer Offenvorgabeposition und einer Schließvorgabeposition um die Steuernockenschwenkachse (21) schwenkbar ist, wobei zumindest eine sich in Richtung der Steuernockenschwenkachse (21) erstreckende, zum Übertragen einer ersten schaltenden Kraft (16) auf einen der Klammerarme (10) ausgebildete und eingerichtete erste Koppelfläche (36) und eine von der ersten Koppelfläche (36) verschiedene, sich in Richtung der Steuernockenschwenkachse (21) erstreckende, zum Übertragen einer der ersten schaltenden Kraft (16) entgegengerichteten zweiten schaltenden Kraft 16') auf den Klammerarm (10) ausgebildete und eingerichtete zweite Koppelfläche (36'), und **dadurch gekennzeichnet, dass** der Steuernocken (20) ein Vorspannelement umfasst, das ausgebildet ist, mit einem Anschlagelement der Klammervorrichtung (1) zu interagieren, so dass der Steuernocken (20) in die Offenvorgabeposition vorgespannt ist, wenn sich der Steuernocken (20) in der Offenvorgabeposition befindet, und in die Schließvorgabeposition vorgespannt ist, wenn sich der Steuernocken (20) in der Schließvorgabeposition befindet, das zumindest eine Federelement (41) als gekrümmte Blattfeder, in Form eines bezogen auf die Steuernockenschwenkachse (21) radial federnd gelagerten Bolzens (47) oder in Form eines Biegebalkens mit freiem Ende (411) ausgebildet ist.

2. Steuernocken (20) gemäß dem vorstehenden Anspruch, **dadurch gekennzeichnet, dass** die Koppelflächen (36, 36') eines Koppelelementes in Bezug auf das Koppelelement, insbesondere auf dessen Kontur bzw. Querschnittkontur senkrecht zur Steuernockenschwenkachse (21), gegenüberliegend am Koppelelement angeordnet sind.

3. Steuernocken (20) gemäß dem vorstehenden Anspruch, **dadurch gekennzeichnet, dass** das zumindest eine Koppelelement in Form einer Langlochnut (31), bevorzugt zum Aufnehmen eines an einem Klammerarm (10) angeordneten Steuerbolzens (32), oder in Form eines Steuerbolzens (32), bevorzugt zum Eindringen in eine an einem Klammerarm (10) angeordneten Langlochnut (31), ausgebildet ist.

4. Steuernocken (20) gemäß dem vorstehenden Anspruch, **dadurch gekennzeichnet, dass** der zumindest eine Steuernocken (32) sich in Richtung der Steuernockenschwenkachse (21) mit einer vorgegebenen Höhe von einer Stirnseite (27) des Wellenabschnitts (26) erstreckt, oder die zumindest eine Langlochnut (31) sich in Richtung der Steuernockenschwenkachse (21) mit einer vorgegebenen Tiefe von einer Stirnseite (27) des Wellenabschnitts (26) in den Steuernocken (21) erstreckt.

5. Steuernocken (20) gemäß einem der vorstehenden Ansprüche, **dadurch gekennzeichnet, dass** zwei Koppelelemente vorgesehen sind, wobei jeweils ein Koppelelement zum Koppeln des Steuernockens (20) mit jeweils einem Klammerarm (10, 10') der Klammervorrichtung (1) ausgebildet ist, wobei bevorzugt ein erstes Koppelelement, bevorzugt ein erster Steuerbolzen (32), einen ersten Abstand (320) zur Steuernockenschwenkachse (21) aufweist und ein zweites Koppelelement, bevorzugt ein zweiter Steuerbolzen (32'), einen zweiten Abstand (320') zur Steuernockenschwenkachse (21)aufweist, wobei der Betrag des zweiten Abstands (320') bevorzugt größer ist als jener des erstes Abstands (320).

6. Steuernocken (20) gemäß einem der vorstehenden Ansprüche, **dadurch gekennzeichnet, dass** das zumindest eine Koppelelement, bevorzugt zumindest ein Steuerbolzen (32), exzentrisch zur Steuernockenschwenkachse (21) angeordnet ist.

7. Steuernocken (20) gemäß einem der Ansprüche 3 bis 6, **dadurch gekennzeichnet, dass** der zumindest eine Steuerbolzen (32) einen bezogen auf eine bevorzugt parallel zur Steuernockenschwenkachse (21) orientierte Längsmittelachse (325) des Steuerbolzens (32) gekrümmten Abschnitt, bevorzugt einen kreisbogenförmigen Abschnitt (321), umfasst, und/oder zumindest ein Steuerbolzen (32) einen sich in einer senkrecht zur Steuernockenschwenkachse (21) orientierten Ebene erstreckenden Nockenabschnitt (322) aufweist, und/oder, wenn zwei Steuerbolzen (32) vorgesehen sind, die Steuerbolzen (32) durch eine Verbindungswand (324) verbunden sind, wobei bevorzugt zumindest eine Koppelfläche (36, 36') im gekrümmten Abschnitt und/oder im Nockenabschnitt (322) angeordnet ist.

8. Steuernocken (20) gemäß einem der vorstehenden Ansprüche, **dadurch gekennzeichnet, dass** der Steuernocken (20) eine radiale Sicherungsnut (327) zum Aufnehmen eines Fixierungselements, bevorzugt einer Passfeder oder eines Sicherungsbleches, umfasst, um den Steuernocken (20) bezogen auf die Steuernockenschwenkachse (21) axial zu fixieren, und/oder der zumindest eine Steuerbolzen (32) in Richtung der Steuernockenschwenkachse (21) gesehen an seinem stirnseitigen freien Ende gegenüber einer Stirnseite (27) des Wellenabschnitts (26) einen Sicherungssteg (323) zum axialen Sichern des Steuernockens (20) an der Klammervorrichtung (1) aufweist, wobei bevorzugt der Sicherungssteg (323) ausgebildet ist in Form eines konzentrisch oder exzentrisch zur Längsmittelachse (325) des Steuerbolzens (32) angeordneten bevorzugt kreisförmigen Flansches, dessen Außendurchmesser bevorzugt größer ist als ein Radius eines kreisbogenförmigen Abschnitts (321) des Steuerbolzens (32) und/oder bevorzugt größer ausgebildet ist als eine Breite der am Klammerarm (10) der Klammervorrichtung (1) vorgesehenen Langlochnut (31) quer zu deren Längserstreckung (310).

9. Steuernocken (20) gemäß einem der vorstehenden Ansprüche, **dadurch gekennzeichnet, dass** der Steuernocken (20) einen sich in Bezug auf die Steuernockenschwenkachse (21) nach radial außen erstreckenden Interaktionsteil (22) zum Interagieren mit einem Interaktionsbolzen einer Behälterbehandlungsvorrichtung aufweist, wobei der Interaktionsteil (22) zum Begrenzen eines Bewegungsumfangs des Steuernockens (20) um die Steuernockenschwenkachse (21) ausgebildet ist, wobei der Interaktionsteil (22) bevorzugt ausgebildet ist, mit einem Anschlag (3) der Klammervorrichtung (1) wechselzuwirken, wobei der Steuernocken (20) bevorzugt zwei sich in Bezug auf die Steuernockenschwenkachse (21) nach radial nach außen erstreckende Arme (24) aufweist.

10. Steuernocken (20) gemäß einem der vorstehenden Ansprüche, **dadurch gekennzeichnet, dass** das Vorspannelement ein elastisches Federelement (41) umfasst, wobei das Federelement (41) in Bezug auf die Steuernockenschwenkachse (21) eine Krümmung aufweist, die größer ist als eine Krümmung eines konzentrisch zur Steuernockenschwenkachse (21) vorliegenden geometrischen Teilkreises (45) auf Höhe des Federelements (41)

11. Steuernocken (20) gemäß einem der vorstehenden Ansprüche, **dadurch gekennzeichnet, dass** das Vorspannelement einen sich zu einem konzentrisch zur Steuernockenschwenkachse (21) vorliegenden geometrischen Teilkreis (45) nach radial außen erstreckenden Steg (46), und sich vom dem Steg (46) bezogen auf die Steuernockenschwenkachse (21) quer zur radialen Richtung erstreckendes Federelement (41) umfasst, wobei bevorzugt beidseitig des Stegs (46) sich jeweils ein Federelement 41 erstreckt, wobei bevorzugt zwischen einem freien Ende (411) des Federelements (41) und einem dem Ende (411) gegenüberliegenden Arm (24) ein Abstand vorliegt, so dass eine Aufnahme (49) zum formschlüssigen Aufnehmen einer Laufrolle (42) der Klammervorrichtung (1) in Umfangsrichtung bezogen auf die Steuernockenschwenkachse 21 bereitgestellt ist.

12. Klammervorrichtung (1) zum Halten eines Behälters in einer Behälterbehandlungsvorrichtung, bevorzugt zum Halten eines Getränkebehälters in einem Halsabschnitt, umfassend zwei Klammerarme (10) mit einem Halteabschnitt (11) zum Halten des zu haltenden Behälters,
**dadurch gekennzeichnet, dass**
die Klammerarme (10) mit einem Steuernocken (20) gemäß einem der vorstehenden Ansprüche gekoppelt sind.

## Claims

1. A control cam (20) for controlling the position of mutually pivotable clamping arms (10) of a clamping apparatus (1), comprising a shaft portion (26) for pivoting the control cam (20) about a control cam pivot axis (21) in a hub portion (5) of a carrier plate (2) of the clamping apparatus (1), wherein the control cam (20) is pivotable between an open preset position and a closed preset position about the control cam pivot axis (21), wherein at least one first coupling surface (36) extending in the direction of the control cam pivot axis (21) and configured to transmit a first switching force (16) to one of the clamping arms (10), and a second coupling surface (36') extending in the direction of the control cam pivot axis (21) and different from the first coupling surface (36) and configured to transmit a second switching force (16') opposite to the first switching force (16) to the clamping arm (10), and **characterized in that**
the control cam (20) comprises a preloading element configured to interact with a stop element of the clamping apparatus (1) such that the control cam (20) is preloaded into the open preset position when the control cam (20) is in the open preset position, and is preloaded into the closed preset position when the control cam (20) is in the closed preset position,
the at least one spring element (41) is configured as a curved leaf spring, in the form of a bolt (47) which is radially spring-mounted with respect to the control cam pivot axis (21) or in the form of a bending beam with a free end (411).

2. The control cam (20) according to the preceding claim,
**characterized in that** the coupling surfaces (36, 36') of a coupling element are arranged opposite each other on the coupling element with respect to the coupling element, in particular to its contour or cross-sectional contour perpendicular to the control cam pivot axis (21).

3. The control cam (20) according to the preceding claim,
**characterized in that** the at least one coupling element is configured in the form of an elongated slot (31), preferably for receiving a control bolt (32) arranged on a clamping arm (10), or in the form of a control bolt (32), preferably for penetrating an elongated slot (31) arranged on a clamping arm (10).

4. The control cam (20) according to the preceding claim,
**characterized in that** the at least one control cam (32) extends in the direction of the control cam pivot axis (21) with a predefined height from an end face (27) of the shaft portion (26), or the at least one elongated slot (31) extends in the direction of the control cam pivot axis (21) with a predefined depth from an end face (27) of the shaft portion (26) into the control cam (21).

5. The control cam (20) according to any of the preceding claims, **characterized in that** two coupling elements are provided, wherein one coupling element is configured to couple the control cam (20) with each clamping arm (10, 10') of the clamping apparatus (1), wherein preferably a first coupling element, preferably a first control bolt (32), has a first distance (320) to the control cam pivot axis (21) and a second coupling element, preferably a second control bolt (32'), has a second distance (320') to the control cam pivot axis (21), wherein the amount of the second distance (320') is preferably greater than that of the first distance (320).

6. The control cam (20) according to any of the preceding claims, **characterized in that** the at least one coupling element, preferably at least one control bolt (32), is arranged eccentrically to the control cam pivot axis (21).

7. The control cam (20) according to any of claims 3 to 6,
**characterized in that** the at least one control bolt (32) comprises a curved portion, preferably a circular arc-shaped portion (321), with respect to a longitudinal central axis (325) of the control bolt (32) preferably oriented parallel to the control cam pivot axis (21), and/or at least one control bolt (32) has a cam portion (322) extending in a plane oriented perpendicular to the control cam pivot axis (21), and/or, if two control bolts (32) are provided, the control bolts (32) are connected by a connecting wall (324), wherein preferably at least one coupling surface (36, 36') is arranged in the curved portion and/or in the cam portion (322).

8. The control cam (20) according to any of the preceding claims, **characterized in that** the control cam (20) comprises a radial securing groove (327) for receiving a fixing element, preferably a feather key or a locking plate, in order to axially fix the control cam (20) with respect to the control cam pivot axis (21), and/or the at least one control bolt (32) has, viewed in the direction of the control cam pivot axis (21), at its end face free end opposite an end face (27) of the shaft portion (26), a securing projection (323) for axially securing the control cam (20) to the clamping apparatus (1), wherein the securing projection (323) is preferably configured in the form of a preferably circular flange arranged concentrically or eccentrically to the longitudinal central axis (325) of the control bolt (32), the outer diameter of which flange is preferably larger than a radius of a circular arc-shaped portion (321) of the control bolt (32) and/or is preferably larger than a width of the elongated slot (31) provided on the clamping arm (10) of the clamping apparatus (1) transverse to its longitudinal extent (310).

9. The control cam (20) according to any of the preceding claims, **characterized in that** the control cam (20) has an interaction part (22) extending radially outward with respect to the control cam pivot axis (21) for interacting with an interaction bolt of a container treatment apparatus, wherein the interaction part (22) is configured to limit a range of movement of the control cam (20) about the control cam pivot axis (21), wherein the interaction part (22) is preferably configured to interact with a stop (3) of the clamping apparatus (1), wherein the control cam (20) preferably has two arms (24) extending radially outward with respect to the control cam pivot axis (21).

10. The control cam (20) according to any of the preceding claims, **characterized in that** the preload element comprises an elastic spring element (41), wherein the spring element (41) has a curvature with respect to the control cam pivot axis (21) that is greater than a curvature of a geometric pitch circle (45) concentric to the control cam pivot axis (21) at the level of the spring element (41)

11. The control cam (20) according to any of the preceding claims, **characterized in that** the preload element comprises a projection (46) extending radially outward to a geometric pitch circle (45) concentric with respect to the control cam pivot axis (21), and a spring element (41) extending transversely in the radial direction from the projection (46) with respect to the control cam pivot axis (21), wherein preferably a spring element 41 extends on both sides of the projection (46), wherein preferably a distance exists between a free end (411) of the spring element (41) and an arm (24) opposite the end (411), so that a receptacle (49) for engaging a roller (42) of the clamping apparatus (1) in a form-fitting manner is provided in the circumferential direction with respect to the control cam pivot axis 21.

12. A clamping apparatus (1) for holding a container in a container treatment apparatus, preferably for holding a beverage container in a neck portion, comprising two clamping arms (10) with a holding portion (11) for holding the container to be held,
**characterized in that**
the clamping arms (10) are coupled to a control cam (20) according to any of the preceding claims.

## Revendications

1. Came de commande (20) pour la commande de la position de bras de serrage (10) pivotant les uns par rapport aux autres d'un dispositif de serrage (1), comprenant une section formant arbre (26) pour le montage pivotant de la came de commande (20) autour d'un axe de pivotement de came de commande (21) dans une section de moyeu (5) d'une plaque de support (2) du dispositif de serrage (1), dans laquelle la came de commande (20) peut pivoter autour de l'axe de pivotement de came de commande (21) entre une position de consigne d'ouverture et une position de consigne de fermeture, dans laquelle au moins une première surface d'accouplement (36) s'étendant dans la direction de l'axe de pivotement de came de commande (21) et réalisée et conçue pour transmettre une première force de commutation (16) à l'un des bras de serrage (10) et une seconde surface d'accouplement (36') différente de la première surface d'accouplement (36), s'étendant dans la direction de l'axe de pivotement de came de commande (21), et réalisée et conçue pour transmettre une seconde force de commutation (16') opposée à la première force de commutation (16) au bras de serrage (10), et **caractérisée en ce que**
la came de commande (20) comprend un élément de précontrainte conçu pour interagir avec un élément formant butée du dispositif de serrage (1), de sorte que la came de commande (20) est précontrainte dans la position de consigne d'ouverture lorsque la came de commande (20) est dans la position de consigne d'ouverture et est précontrainte dans la position de consigne de fermeture lorsque la came de commande (20) est dans la position de consigne de fermeture,
l'au moins un élément formant ressort (41) est réalisé sous forme de ressort à lame courbé, sous la forme d'un tourillon (47) monté de manière élastique radialement par rapport à l'axe de pivotement de came de commande (21) ou sous la forme d'une barre de flexion comportant une extrémité libre (411).

2. Came de commande (20) selon la revendication précédente, **caractérisée en ce que** les surfaces d'accouplement (36, 36') d'un élément d'accouplement sont disposées de manière opposée sur l'élément d'accouplement par rapport à l'élément d'accouplement, en particulier par rapport à son contour ou à son contour de section transversale perpendiculaire à l'axe de pivotement de came de commande (21).

3. Came de commande (20) selon la revendication précédente, **caractérisée en ce que** l'au moins un élément d'accouplement est réalisé sous la forme d'une rainure à trou oblong (31), de préférence pour la réception d'un tourillon de commande (32) disposé sur un bras de serrage (10), ou sous la forme d'un tourillon de commande (32), de préférence pour la pénétration dans une rainure à trou oblong (31) disposée sur un bras de serrage (10).

4. Came de commande (20) selon la revendication précédente, **caractérisée en ce que** l'au moins une came de commande (32) s'étend dans la direction de l'axe de pivotement de came de commande (21) avec une hauteur prédéterminée à partir d'un côté frontal (27) de la section formant arbre (26), ou l'au moins une rainure à trou oblong (31) s'étend dans la direction de l'axe de pivotement de came de commande (21) avec une profondeur prédéterminée à partir d'un côté frontal (27) de la section formant arbre (26) dans la came de commande (21).

5. Came de commande (20) selon l'une des revendications précédentes, **caractérisée en ce que** deux éléments d'accouplement sont prévus, dans laquelle respectivement un élément d'accouplement est réalisé pour l'accouplement de la came de commande (20) avec respectivement un bras de serrage (10, 10') du dispositif de serrage (1), dans laquelle de préférence un premier élément d'accouplement, de préférence un premier tourillon de commande (32), présente une première distance (320) par rapport à l'axe de pivotement de came de commande (21) et un second élément d'accouplement, de préférence un second tourillon de commande (32'), présente une seconde distance (320') par rapport à l'axe de pivotement de came de commande (21), dans laquelle la valeur de la seconde distance (320') est de préférence supérieure à celle de la première distance (320).

6. Came de commande (20) selon l'une des revendications précédentes, **caractérisée en ce que** l'au moins un élément d'accouplement, de préférence au moins un tourillon de commande (32), est disposé excentriquement par rapport à l'axe de pivotement de came de commande (21).

7. Came de commande (20) selon l'une des revendications 3 à 6, **caractérisée en ce que** l'au moins un tourillon de commande (32) comprend une section incurvée, de préférence une section en forme d'arc de cercle (321), par rapport à un axe médian longitudinal (325) du tourillon de commande (32) orienté de préférence parallèlement à l'axe de pivotement de came de commande (21), et/ou au moins un tourillon de commande (32) présente une section de came (322) s'étendant dans un plan orienté perpendiculairement à l'axe de pivotement de came de commande (21), et/ou, lorsque deux tourillons de commande (32) sont prévus, les tourillons de commande (32) sont reliés par une paroi de liaison (324), dans laquelle de préférence au moins une surface d'accouplement (36, 36') est disposée dans la section incurvée et/ou dans la section de came (322).

8. Came de commande (20) selon l'une des revendications précédentes, **caractérisée en ce que** la came de commande (20) comprend une rainure de blocage radiale (327) pour la réception d'un élément de fixation, de préférence un ressort d'ajustage ou une tôle de blocage, afin de fixer axialement la came de commande (20) par rapport à l'axe de pivotement de came de commande (21), et/ou l'au moins un tourillon de commande (32), vu dans la direction de l'axe de pivotement de came de commande (21), présente à son extrémité libre côté frontal, en face d'un côté frontal (27) de la section formant arbre (26), une barrette de blocage (323) pour la fixation axiale de la came de commande (20) sur le dispositif de serrage (1), dans laquelle de préférence la barrette de blocage (323) est réalisée sous la forme d'une bride de préférence circulaire disposée concentriquement ou excentriquement par rapport à l'axe médian longitudinal (325) du tourillon de commande (32), bride dont le diamètre extérieur est de préférence supérieur à un rayon d'une section en forme d'arc de cercle (321) du tourillon de commande (32) et/ou est de préférence supérieur à une largeur de la rainure à trou oblong (31) prévue sur le bras de serrage (10) du dispositif de serrage (1) transversalement à son extension longitudinale (310).

9. Came de commande (20) selon l'une des revendications précédentes, **caractérisée en ce que** la came de commande (20) présente une partie d'interaction (22) s'étendant radialement vers l'extérieur par rapport à l'axe de pivotement de came de commande (21) pour l'interaction avec un tourillon d'interaction d'un dispositif de traitement de récipient, dans laquelle la partie d'interaction (22) est réalisée pour limiter une amplitude de mouvement de la came de commande (20) autour de l'axe de pivotement de came de commande (21), dans laquelle la partie d'interaction (22) est de préférence réalisée pour interagir avec une butée (3) du dispositif de serrage (1), dans laquelle la came de commande (20) présente de préférence deux bras (24) s'étendant radialement vers l'extérieur par rapport à l'axe de pivotement de came de commande (21).

10. Came de commande (20) selon l'une des revendications précédentes, **caractérisée en ce que** l'élément de précontrainte comprend un élément formant ressort (41) élastique, dans laquelle l'élément formant ressort (41) présente, par rapport à l'axe de pivotement de came de commande (21), une courbure qui est supérieure à une courbure d'un cercle partiel géométrique (45) concentrique à l'axe de pivotement de came de commande (21), à hauteur de l'élément formant ressort (41)

11. Came de commande (20) selon l'une des revendications précédentes, **caractérisée en ce que** l'élément de précontrainte comprend une nervure (46) s'étendant radialement vers l'extérieur par rapport à un cercle partiel géométrique (45) concentrique à l'axe de pivotement de came de commande (21), et un élément formant ressort (41) s'étendant transversalement à la direction radiale à partir de la nervure (46) par rapport à l'axe de pivotement de came de commande (21), dans laquelle de préférence, respectivement un élément formant ressort (41) s'étend des deux côtés de la nervure (46), dans laquelle de préférence une distance existe entre une extrémité libre (411) de l'élément formant ressort (41) et un bras (24) opposé à l'extrémité (411), de sorte qu'un logement (49) est prévu pour la réception par complémentarité de forme d'un galet de roulement (42) du dispositif de serrage (1) dans la direction circonférentielle par rapport à l'axe de pivotement de came de commande (21).

12. Dispositif de serrage (1) pour le maintien d'un récipient dans un dispositif de traitement de récipient, de préférence pour le maintien d'un récipient pour boisson dans une section formant col, comprenant deux bras de serrage (10) comportant une section de maintien (11) pour le maintien du récipient à maintenir,
**caractérisé en ce que**
les bras de serrage (10) sont accouplés à une came de commande (20) selon l'une des revendications précédentes.
